(19) Europäisches Patentamt / European Patent Office / Office européen des brevets

(11) **EP 4 289 625 B1**

(12) **EUROPEAN PATENT SPECIFICATION**

(45) Date of publication and mention
of the grant of the patent:
**24.12.2025 Bulletin 2025/52**

(21) Application number: **21924622.0**

(22) Date of filing: **04.02.2021**

(51) International Patent Classification (IPC):
*B41J 2/14* (2006.01)      *B41J 2/18* (2006.01)
*B41J 29/38* (2006.01)      *B41J 2/155* (2006.01)
*C09D 11/102* (2014.01)      *C09D 11/107* (2014.01)
*C09D 11/104* (2014.01)      *C09D 11/322* (2014.01)
*C09D 11/38* (2014.01)      *C09D 11/14* (2006.01)

(52) Cooperative Patent Classification (CPC):
**B41J 29/38; B41J 2/14209; B41J 2/155;**
**C09D 11/102; C09D 11/104; C09D 11/107;**
**C09D 11/14; C09D 11/322; C09D 11/38;**
B41J 2002/14362; B41J 2002/14419;
B41J 2002/14459; B41J 2202/12; B41J 2202/20

(86) International application number:
**PCT/JP2021/004086**

(87) International publication number:
**WO 2022/168226 (11.08.2022 Gazette 2022/32)**

(54) **IMAGE FORMATION METHOD**

BILDERZEUGUNGSVERFAHREN

PROCÉDÉ DE FORMATION D'IMAGE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(43) Date of publication of application:
**13.12.2023 Bulletin 2023/50**

(73) Proprietor: **KONICA MINOLTA, INC.**
**Tokyo 100-7015 (JP)**

(72) Inventors:
• **HAMANO, Hikaru**
  **Tokyo 100-7015 (JP)**

• **OMATA, Takenori**
  **Tokyo 100-7015 (JP)**

(74) Representative: **Gille Hrabal**
**Partnerschaftsgesellschaft mbB**
**Patentanwälte**
**Brucknerstraße 20**
**40593 Düsseldorf (DE)**

(56) References cited:
**EP-A1- 3 636 438      JP-A- 2008 213 281**
**JP-A- 2010 155 928      JP-A- 2018 099 791**
**US-A1- 2009 322 811      US-A1- 2010 165 020**

**Description**

TECHNICAL FIELD

The present invention relates to an image formation method, and more particularly, the present invention relates to an image formation method in which when a highly thixotropic ink is used and the ink is ejected by circulating the ink in the vicinity of nozzles, changes in the ink viscosity during ejection can be suppressed, and improvement in the image quality can be promoted by making the ejection speeds among the nozzles uniform.

BACKGROUND ART

Inkjet heads having a circulation mechanism for stably ejecting water-based inks have been conventionally employed. Along with enhancement in the image quality, droplet size reduction and high pinning properties are required for inks, and it has become necessary to increase the solid content concentration of inks.

When the solid content concentration of an ink is increased, the ink exhibits thixotropic properties, the ink viscosity changes according to the shear force, and therefore, there is a problem of unstable ejection.

In order to obtain high pinning properties, an ink that is actively imparted with thixotropic properties so as to have increased viscosity after being ejected has also been disclosed (see, for example, Patent Document 1).

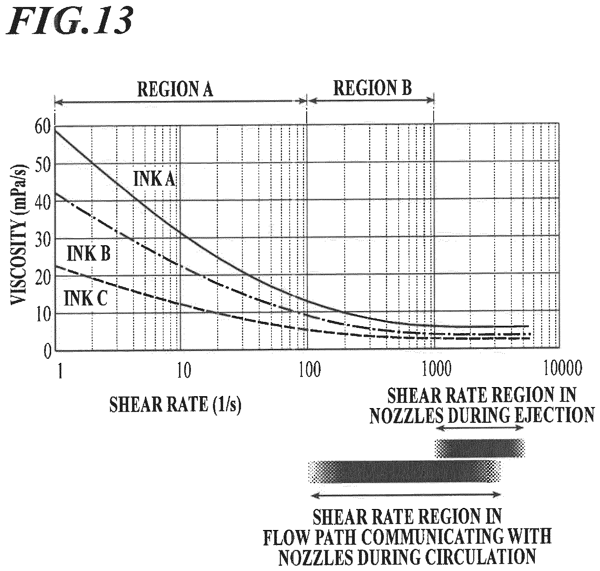

A highly thixotropic ink is such that during ejection, the ink flow velocity rapidly increases, and at the same time, the ink viscosity is also rapidly decreased (for example, the ink viscosity passes through the shear rate region of region A in FIG. 13). Therefore, while there is production tolerance, it is difficult to make the flow velocities inside a plurality of pressure chambers uniform, and since the ejection speeds among the nozzles are not uniform, there is a problem that the image quality is deteriorated. In FIG. 13, ink A represents an ink with higher thixotropic properties than ink B and ink C.

Furthermore, in a case where such a highly thixotropic ink is used in an inkjet head having circulation flow paths as described in Patent Document 1, when the ink is circulated in the vicinity of nozzles to cause the ink viscosity to change only within the shear rate region of region B in FIG. 13, it is possible to suppress a change in the ink viscosity during ejection, and the ejection speeds among the nozzles can be made uniform. However, when the inkjet head has a structure in which the direction of circulation and the direction of ejection of the ink are perpendicular to each other, there is a problem that the image quality is deteriorated by a phenomenon in which as the circulation flow velocity keeps increasing, liquid droplets bend to the direction of circulation.

On the other hand, in a structure in which a discharging flow path (circulation flow path) is provided on one side of an ink channel (flow path communicating with nozzles) as disclosed in Patent Document 2, the circulation flow velocity on the side without the discharging flow path becomes extremely slow, and a distribution in the ink viscosity within the ink channel is created. Another example image formation method according to the preamble of claim 1 is known from Patent Document 3.

CITATION LIST

Patent Literature

Patent Document 1: JP 2011-225859A
Patent Document 2: JP 5514579B2
Patent Document 3: US 2010/165020 A1

SUMMARY OF THE INVENTION

TECHNICAL PROBLEM

The present invention is made in view of the above-described problems and circumstances, and an object of the present invention is to provide an image formation method by which when a highly thixotropic ink is used and an ink is ejected by circulating the ink in the vicinity of nozzles, changes in the ink viscosity during ejection can be suppressed, the ejection speeds among the nozzles are made uniform, and improvement in the image quality can be promoted.

SOLUTION TO PROBLEM

In a process of conducting an investigation on the causes and the like of the above-described problems so as to solve the above-described problems, the inventors of the present invention found that when a highly thixotropic ink whose viscosity with respect to the shear rate of the ink is within a specific range is used, and the average shear rate in flow paths communicating with nozzles is controlled to be 100 [1/s] or more by an ink circulation device, the ejection speeds among nozzles can be made uniform, and improvement in the image quality can be promoted. Thus, the inventors completed the present invention.

ADVANTAGEOUS EFFECTS OF INVENTION

According to the present invention, there can be provided an image formation method in which when a highly thixotropic ink is used and the ink is ejected by circulating the ink in the vicinity of nozzles, changes in the ink viscosity during ejection can be suppressed, the ejection speeds among the nozzles are made uniform, and improvement in the image quality can be promoted.

The inducement mechanism or operation mechanism of the effects of the present invention is not clearly understood; however, the mechanism is speculated as follows.

When the viscosity at 25°C of the ink at a shear rate of 1 [1/s] is designated as A1, the viscosity at a shear rate of 100 [1/s] is designated as A100, and the viscosity at a shear rate of 1000 [1/s] is designated as A1000, as the relationships of the above-described Formula (I) and Formula (II) are satisfied, the ink viscosity changes only in region B in FIG. 13. As a result, when such a highly thixotropic ink is ejected, even in a case where the ink is circulated in the vicinity of nozzles, changes in the ink viscosity during ejection can be suppressed. Therefore, the ejection speeds among nozzles can be made uniform, and improvement in the image quality can be promoted.

BRIEF DESCRIPTION OF DRAWINGS

FIG. 1 is an outline diagram showing an inkjet recording apparatus.
FIG. 2 is a bottom view of a head unit.
FIG. 3A is a perspective view of an inkjet head.
FIG. 3B is a cross-sectional view of the inkjet head.
FIG. 4 is an exploded perspective view of the inkjet head.
FIG. 5 is an exploded perspective view of a head chip.
FIG. 6A is a plan view of a pressure chamber substrate.
FIG. 6B is a bottom view of the pressure chamber substrate.
FIG. 7A is a plan view of a flow path spacer substrate.
FIG. 7B is a bottom view of the flow path spacer substrate.
FIG. 8 is a plan view of a nozzle substrate.
FIG. 9A is a cross-sectional view of a head chip when cut along IXA-IXA.
FIG. 9B is a cross-sectional view of the head chip when cut along IXB-IXB.
FIG. 10A is a cross-sectional view of the head chip when cut along XA-XB.
FIG. 10B is a cross-sectional view of the head chip when cut along XA-XB.
FIG. 11 is a schematic diagram showing an ink circulation system.
FIG. 12 is a block diagram showing important functional configuration of the inkjet recording apparatus.
FIG. 13 is a diagram showing viscosity with respect to the shear rate of the ink.

DETAILED DESCRIPTION

The image formation method of the present invention is an image formation method that uses an inkjet recording apparatus having an inkjet head including: a pressure chamber into which an ink is supplied through an ink supply path to freely apply pressure to the ink stored therein; nozzles provided to communicate with the pressure chamber, each nozzle having an ejection opening for ejecting the ink; and a plurality of ink discharging flow paths connected in proximity to communication sites of the nozzles with the pressure chamber, in which the plurality of ink discharging flow paths are arranged such that two or more of the ink discharging flow paths are provided to the ejection opening of the nozzle, the inkjet head includes an ink circulation device that circulates the ink to the ink discharging flow paths through the ink supply path, when the viscosity at 25°C of the ink at a shear rate of 1 [1/s] is designated as A1, and the viscosity at a shear rate of 100 [1/s] is designated as A100, and the viscosity at a shear rate of 1000 [1/s] is designated as A1000, the relationships of the above-described Formula (I) and Formula (II) are satisfied, and the ink circulation device controls the average shear rate in the flow paths communicating with the nozzles in the pressure chamber to be 100 [1/s] or more.

This feature is a technical feature common or parallel to each of the following embodiments.

As an embodiment of the present invention, it is preferable that the ink satisfies the relationships of the above-described Formulas (III) to (V), from the viewpoint that since ink ejection can be achieved within an appropriate viscosity range of the inkjet head even when a thixotropic ink is used, a balance between ejectability and fixability can be promoted.

It is preferable that the speed fluctuation in the ejection speed of the ink to be ejected through the nozzles is 5% or less. That is, as ink ejection is controlled so as to satisfy the relationships of the above-described Formula (1) and Formula (II), even for a highly thixotropic ink, improvement in the image quality can be promoted by suppressing the speed fluctuation in the same nozzles to a level of 5% or less.

Furthermore, it is preferable that an actuator is provided to impart pressure to the ink in the pressure chamber, and the actuator applies an oscillating waveform that has a smaller voltage than a drive waveform, which ejects the ink through the nozzles, and vibrates the interface of the ink in the pressure chamber. By applying an oscillating waveform, the ink is agitated (vibrated), the viscosity of a thixotropic ink can be decreased, and as a result, nozzle clogging or ejection failure can be suppressed.

It is preferable that the ink contains a pigment, a fixing resin, a water-soluble solvent, and water, and the ink contains the pigment in an amount in the range of 3% to 10% by mass, the fixing resin in an amount in the range of 8% to 20% by mass, the water-soluble solvent in an amount in the range of 10% to 30% by mass, and the water in an amount in the range of 40% to 79% by mass, from the viewpoints of ink injectability, adhesiveness to a base material, and ink drying properties.

It is also preferable that the surface tension of the ink is in the range of 22 to 25 mN/m, from the viewpoint of enhancing the ejection stability through the nozzles of the inkjet head and forming images with higher definition.

[Outline of image formation method of present invention]

The image formation method of the present invention uses an inkjet recording apparatus including an ink circulation device, when the viscosity at 25°C of the ink at a shear rate of 1 [1/s] is designated as A1, the viscosity at a shear rate of 100 [1/s] is designated as A100, and the viscosity at a shear rate of 1000 [1/s] is designated as A1000, the relationships of the following Formula (I) and Formula (II) are satisfied, and the ink circulation device controls the average shear rate in the flow paths communicating with the nozzles in the pressure chamber to be 100 [1/s] or more.

$$\text{Formula (I): } A1000 < A100 < A1$$

$$\text{Formula (II): } |A100 - A1000| < |A1 - A100|$$

The inkjet recording apparatus according to the present invention includes: a pressure chamber into which an ink is supplied through an ink supply path to freely apply pressure to the ink stored therein; nozzles provided to communicate with the pressure chamber, each nozzle having an ejection opening for ejecting the ink; and a plurality of ink discharging flow paths connected in proximity to communication sites of the nozzles with the pressure chamber, and the plurality of ink discharging flow paths are arranged such that two or more are provided to the ejection opening of the nozzle. The inkjet recording apparatus further includes an ink circulation device that circulates the ink to the ink discharging flow paths through the ink supply path. The details of the inkjet recording apparatus will be described below.

<Viscosity of ink>

With regard to the ink according to the present invention, the viscosity at 25°C satisfies the relationships of the Formula (I) and Formula (II). Furthermore, it is preferable that the ink according to the present invention satisfies the relationships of the following Formulas (III) to (V).

$$\text{Formula (III): } 1 \text{ mPa·s} < |A1 - A1000|$$

$$\text{Formula (IV): } |A100 - A1000| < 10 \text{ mPa·s}$$

$$\text{Formula (V): } 2 \text{ mPa·s} < A1000 < 20 \text{ mPa·s}$$

The viscosity is measured by using a rheometer (viscoelasticity measuring device), and examples of the rheometer include MCR-102 (manufactured by Anton Paar GmbH). The viscosity at each shear rate was measured under the following conditions.

Measuring jig: CP75-1-SN30423; d = 0.151 mm
Measurement conditions: Measurement was made at a temperature of 25°C.

<Average shear rate in flow paths communicating with nozzles>

The ink circulation device according to the present invention controls the average shear rate in the flow paths communicating with the nozzles in the pressure chamber to be 100 [1/s] or more.

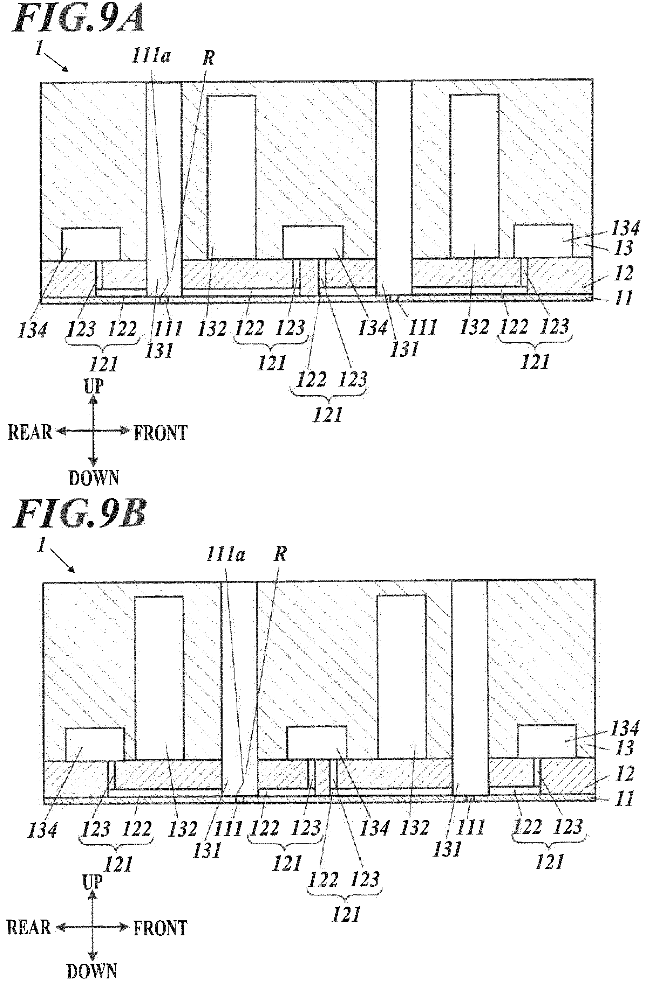

Here, the "average shear rate" refers to the average shear rate during circulation, not during ejection. Furthermore, a "flow path communicating with a nozzle" refers to a flow path in the vicinity of a nozzle in the pressure chamber 131, as indicated by reference symbol R in FIG. 9A. A "flow path in the vicinity of a nozzle" refers to a flow path composed of a flow path component part closest to a nozzle and specifically refers to a flow path R constructed from a flow path spacer substrate 12.

The average shear rate according to the present invention is calculated by the following formula.

$$\text{Average shear rate} = \text{Average flow velocity} \div \text{radius of representative circular pipe}$$

Radius of representative circular pipe = In the case of a non-circular flow path, positive square root of (cross-sectional area $\div \pi$)

Circulation flow rate of a single nozzle = Circulation flow rate of all nozzles (also referred to as "circulation flow rate Q") (measured value) $\div$ number of nozzles

Average flow velocity = Circulation flow rate of a single nozzle $\div$ cross-sectional area of flow paths communicating with nozzles

The ink circulation device according to the present invention controls the average shear rate in the flow paths communicating with the nozzles to be 100 [1/s] or more, and preferably, the ink circulation device controls the average shear rate to be in the range of 100 to 1000 [1/s].

As is understood from the above-described formula for calculating the average shear rate, The means for controlling the average shear rate to be within the above-described range may include, for example, controlling the circulation flow rate Q of all the nozzles.

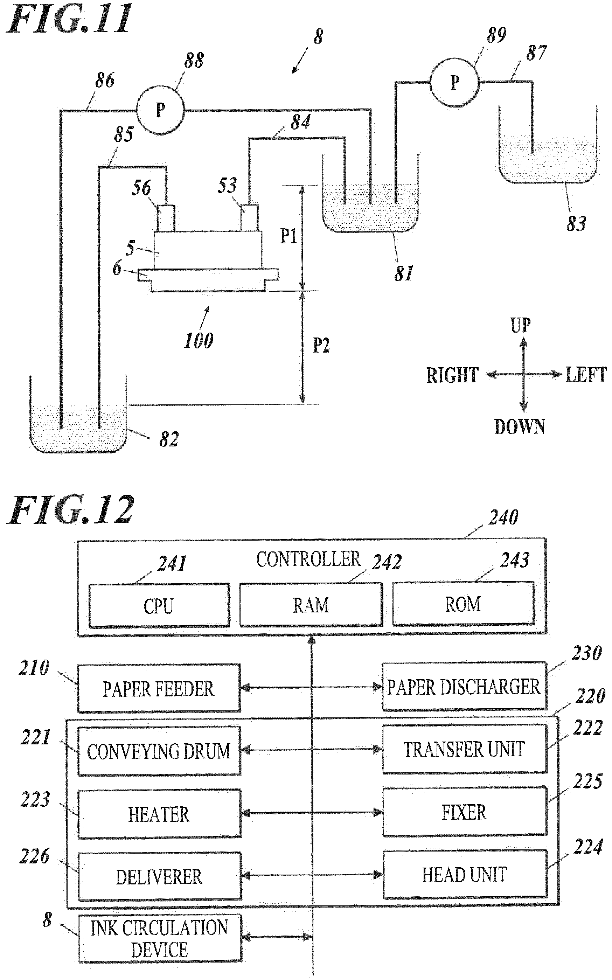

Since the circulation flow rate Q can be calculated by the following formula, in order to control this circulation flow rate Q, the circulation differential pressure (pressure difference) (differential pressure between the INLET and the OUTLET of the head) in first and fourth ink ports 53 and 56 (see FIG. 11), which constitute the ink flow path of the inkjet head in an inkjet recording apparatus 200 that will be described below, may be adjusted. Specifically, a controller 240 of the inkjet recording apparatus 200 adjusts pressure P1 and pressure P2 by appropriately modifying the pressure to be added to a pump 88 of the ink circulation device 8 or the amount of ink filled in each of subtanks 81 and 82 and the position in an up-to-down direction (direction of gravity) of each of the subtanks 81 and 82, and controls the ink flow rate (circulation flow rate Q) communicating with the nozzles by means of the pressure difference of pressure P1 and pressure P2 (circulation differential pressure $\Delta P$).

$$\text{Circulation flow rate Q} = \text{Circulation differential pressure } \Delta P / \text{head flow path resistance R}$$

(in which the circulation differential pressure $\Delta P$ represents the circulation differential pressure in the first and fourth ink ports 53 and 56; and the head flow path resistance represents the flow path resistance from the fourth ink port 56 to the first ink port 53.)

Hereinafter, preferred embodiments of the present invention will be described with reference to the drawings. However, the scope of the invention is not intended to be limited to the illustrated examples. In the present specification, for convenience of description, the print width direction, which is the direction of arrangement of nozzles 111 of the inkjet head 100, is described as the left-to-right direction, the direction in which a recording medium is conveyed below the nozzles 111 is described as the front-to-rear direction, and a direction orthogonally intersecting the left-to-right direction and the front-to-rear direction is described as the up-to-down direction. Furthermore, an arrow in the flow path in the diagrams indicates the direction in which the ink flows.

In the present application, the term "to" is used to mean that the numerical values described before and after the term are included as the lower limit value and the upper limit value.

[Inkjet recording apparatus]

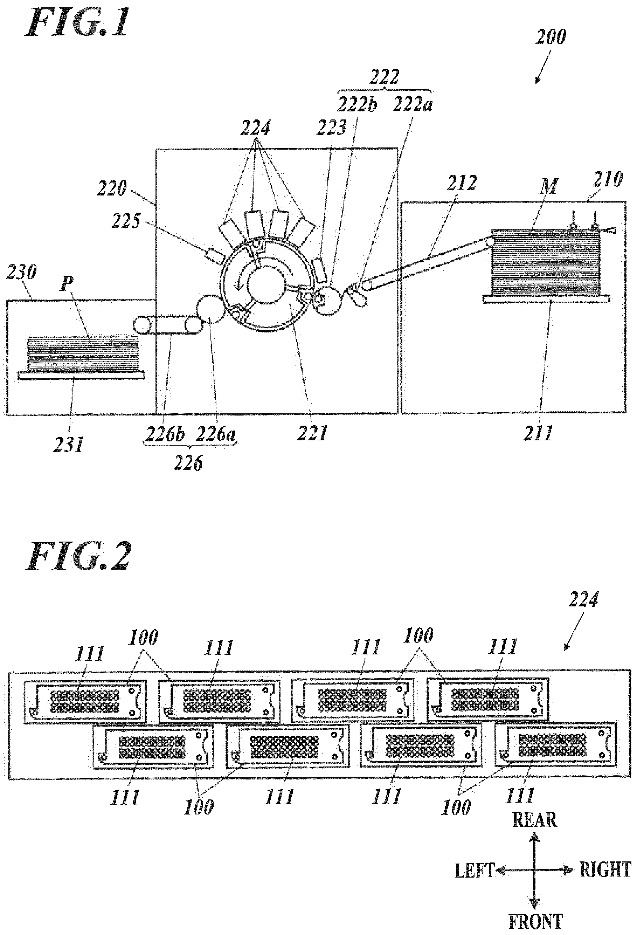

The inkjet recording apparatus 200 includes, as shown in FIG. 1, a paper feeder 210, an image recorder 220, a paper discharger 230, an ink circulation device 8 (see FIG. 11) as ink supply means, a controller (see FIG. 12), and the like. The inkjet recording apparatus 200 conveys a recording medium M stored in the paper feeder 210 to the image recorder 220, forms an image on the recording medium M at the image recorder 220, and conveys the recording medium M with an image formed thereon to the paper discharger 230.

The paper feeder 210 has a paper feed tray 211 that stores the recording medium M, and a medium supplier 212 that conveys and supplies the recording medium M from the paper feed tray 211 to the image recorder 220. The medium supplier 212 includes a ring-shaped belt that is supported on the inner side by two rollers, and conveys the recording medium M from the paper feed tray 211 to the image recorder 220 by rotating the rollers while having the recording medium M placed on this belt.

The image recorder 220 has a conveying drum 221, a transfer unit 222, a heater 223, a head unit 224, a fixer 225, a deliverer 226, and the like.

The conveying drum 221 constitutes circular cylindrical surfaces, and the outer peripheral surface thereof becomes a conveying surface on which the recording medium M is placed. The conveying drum 221 conveys the recording medium M along the conveying surface by rotating in the direction of the arrow in FIG. 1 while retaining the recording medium M on the conveying surface. Furthermore, the conveying drum 221 includes claws and an air intaker (not shown in the diagram), and the recording medium M is retained on the conveying surface by pressing edges of the recording medium M with the claws and drawing the recording medium M onto the conveying surface by means of the air intaker.

The transfer unit 222 is provided at a position between the medium supplier 212 of the paper feeder 210 and the conveying drum 221, and the transfer unit 222 picks up an end of the recording medium M conveyed from the medium supplier 212 by holding with a swing arm 222a and passes on the recording medium M to the conveying drum 221 via a transfer drum 222b.

The heater 223 is provided between the position of disposition of the transfer drum 222b and the position of disposition of the head unit 224 and heats the recording medium M such that the recording medium M conveyed by the conveying drum 221 to reach a temperature within a predetermined temperature range. The heater 223 has, for example, an infrared heater and energizes the infrared heater based on a control signal supplied from the controller (not shown in the diagram) to cause the heater to generate heat.

The head unit 224 injects ink, based on image data, onto the recording medium M at an appropriate timing according to the rotation of the conveying drum 221, on which the recording medium M is retained, to form an image. The head unit 224 is disposed such that the ink injection surface faces the conveying drum 221 at a predetermined distance. In the inkjet recording apparatus 200 of the present embodiment, for example, four head units 224 corresponding to inks of four colors such as yellow (Y), magenta (M), cyan (C), and black (K), respectively, are arranged so as to line up at a predetermined interval in the color order of Y, M, C, and K from the upstream side in the direction of conveyance of the recording medium M.

In the head unit 224, for example, as shown in FIG. 2, a set of a pair of inkjet heads 100 adjacent in the front-to-rear direction are disposed in a staggered manner at different positions in the front-to-rear direction. Furthermore, the head unit 224 is used such that the position with respect to the axis of rotation of the conveying drum 221 is fixed at the time of recording an image. That is, the inkjet recording apparatus 200 is an inkjet recording apparatus 200 that performs image recording by a single-pass drawing method using a line head.

The fixer 225 has a light emitter disposed over the width in the X-direction of the conveying drum 221 and irradiates the recording medium M placed on the conveying drum 221 with energy radiation such as ultraviolet radiation from the light emitter to cure the ink injected onto the recording medium M and fix the image. The light emitter of the fixer 225 is disposed to face the conveying surface on the downstream side of the position of disposition of the head units 224 and on the upstream side of the position of disposition of the transfer drum 226a of the deliverer 226 in the direction of conveyance.

The deliverer 226 has a belt loop 226b having a ring-shaped belt supported on the inner side by two rollers, and a cylindrical-shaped transfer drum 226a that transfers the recording medium M from the conveying drum 221 to the belt loop 226b, and the deliverer 226 conveys the recording medium M that has been transferred from the conveying drum 221 onto the belt loop 226b by the transfer drum 226a, by the belt loop 226b and sends the recording medium M to the paper discharger 230.

The paper discharger 230 has a plate-shaped paper discharge tray 231, on which the recording medium P sent from the image recorder 220 by the deliverer 226 is placed.

[Inkjet head]

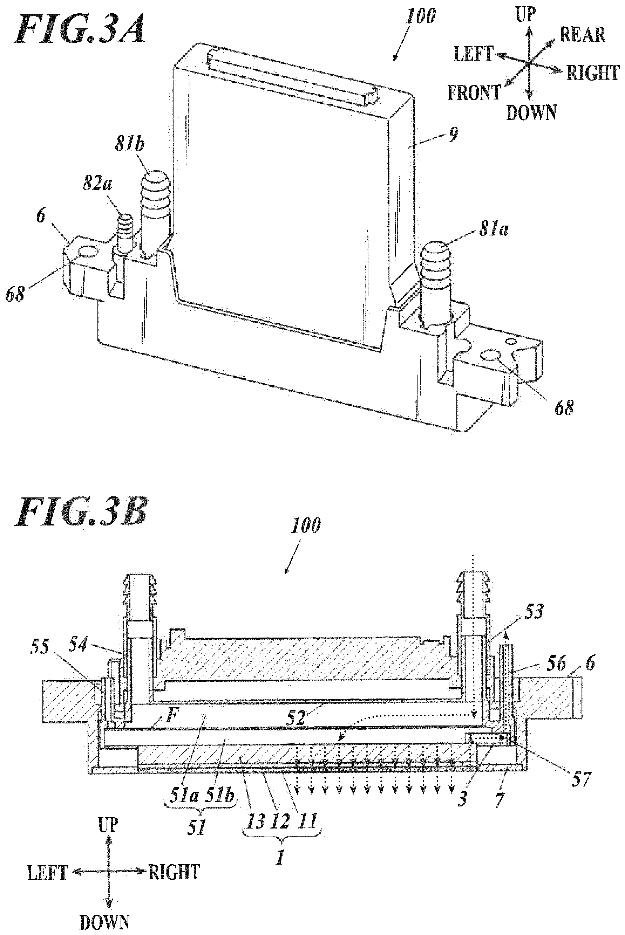

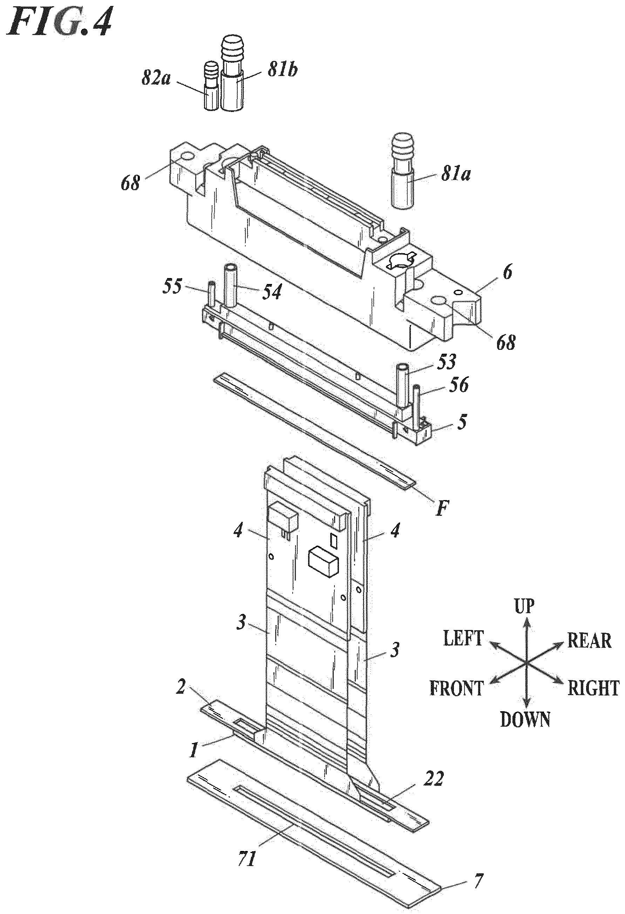

As shown in FIG. 3A, FIG. 3B, FIG. 4, and the like, the inkjet head 100 of the present embodiment includes: a head chip 1; a wiring substrate 2 on which the head chip 1 is arranged; a drive circuit substrate 4 connected to the wiring substrate 2, with a flexible substrate 3 interposed therebetween; a manifold 5 storing the ink to be supplied to the pressure chamber 131 inside the head chip 1; a housing 6 having the manifold 5 accommodated therein; a cap-receiving plate 7 attached to close the bottom opening of the housing 6; a cover member 9 attached to the housing 6; and the like.

In FIG. 3A, depiction of the manifold 5 is omitted, and in FIG. 3B and FIG. 4, depiction of the cover member 9 is omitted.

In the present embodiment, an example in which the number of rows of the nozzles 111 in the head chip 1 is four rows will be described; however, the number of rows and disposition of the nozzles 111 can be appropriately changed, and for example, the number of rows may be any of one row to three rows or may be five or more rows.

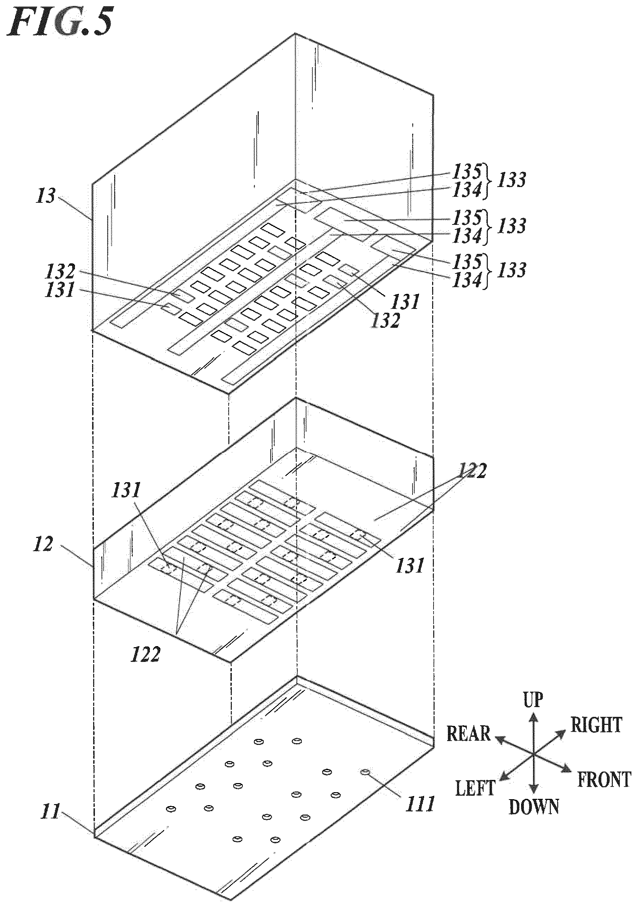

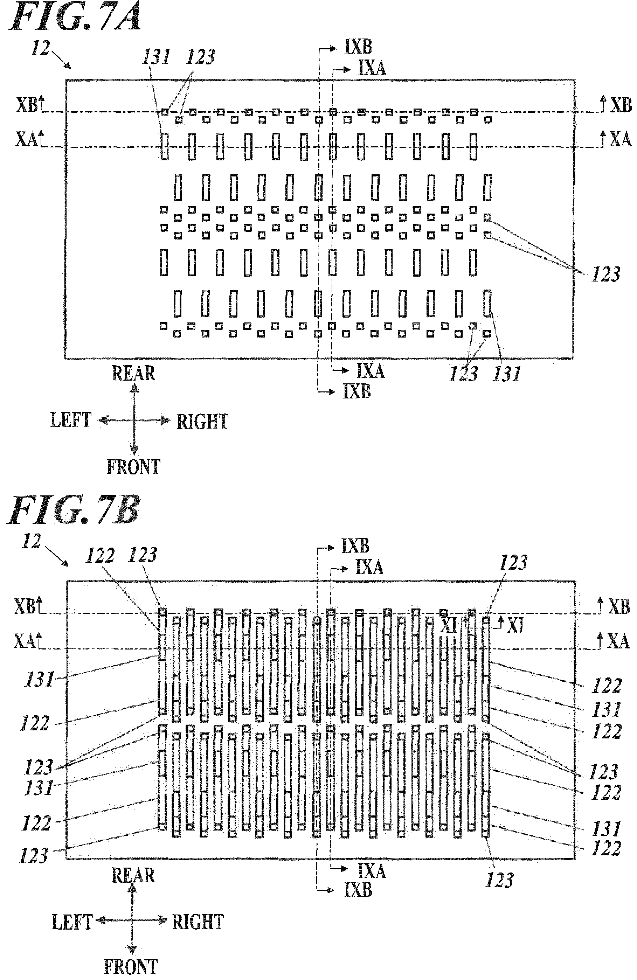

The head chip 1 is an approximately rectangular prism-shaped member elongated in the left-to-right direction and is configured such that a pressure chamber substrate 13, a flow path spacer substrate 12, and a nozzle substrate 11 are laminated in this order (see FIGS. 5 to 10).

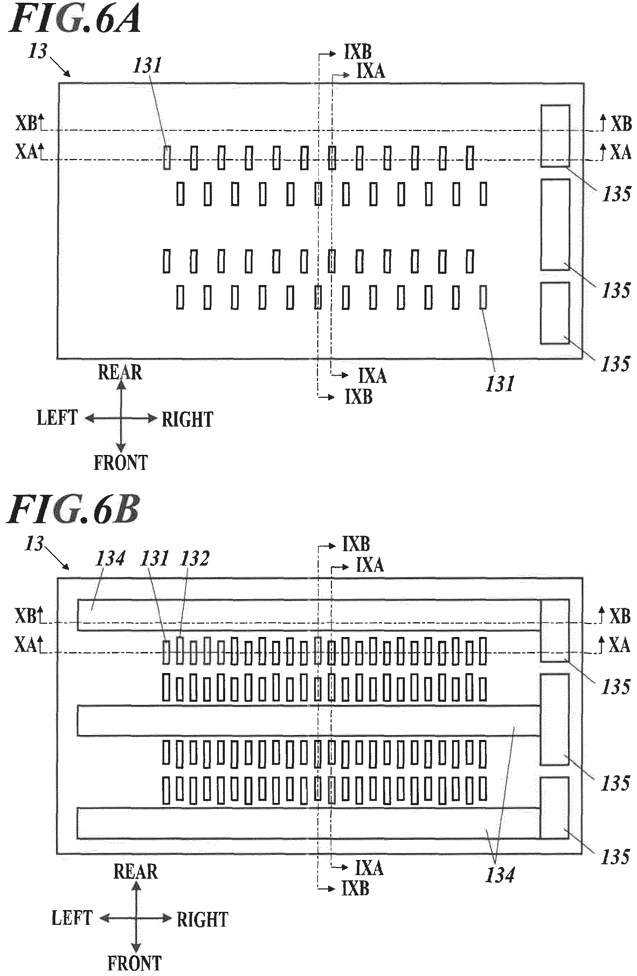

On the pressure chamber substrate 13, pressure chambers 131, air chambers 132, and common ink discharging paths 133, and the like are provided (see FIG. 5, FIG. 6A, FIG. 6B, and the like).

A large number of pressure chambers 131 and air chambers 132 are provided so as to be alternately disposed in the left-to-right direction and provided in four rows in the front-to-rear direction.

The pressure chambers 131 have an approximately rectangular-shaped cross-section and are formed along the up-to-down direction, and each pressure chamber 131 has an inlet port on the upper surface of the pressure chamber substrate 13 and an outlet port on the lower surface. The pressure chamber 131 communicates with an ink reservoir 51 at the upward end, and ink is supplied from the ink reservoir 51 to the pressure chamber 131 and is stored inside the pressure chamber 131 so as to be injected through a nozzle 111. Furthermore, the pressure chamber 131 is formed along the up-to-down direction so as to have an approximately rectangular-shaped cross-section with the same area, extending through the pressure chamber substrate 13 and the flow path spacer substrate 12, and communicates with a nozzle 111 at the downward end (see FIG. 9A, FIG. 9B, and the like).

Each air chamber 132 has an approximately rectangular-shaped cross-section that is slightly larger than the pressure chamber 131 and is formed to be parallel to the pressure chamber 131 along the up-to-down direction. Unlike the pressure chamber 131, the air chamber 132 does not communicate with the ink reservoir 51, and ink is not allowed to flow into the air chamber 132. Furthermore, the air chamber 132 does not communicate with a nozzle 111 (see FIG. 9A, FIG. 9B, and the like).

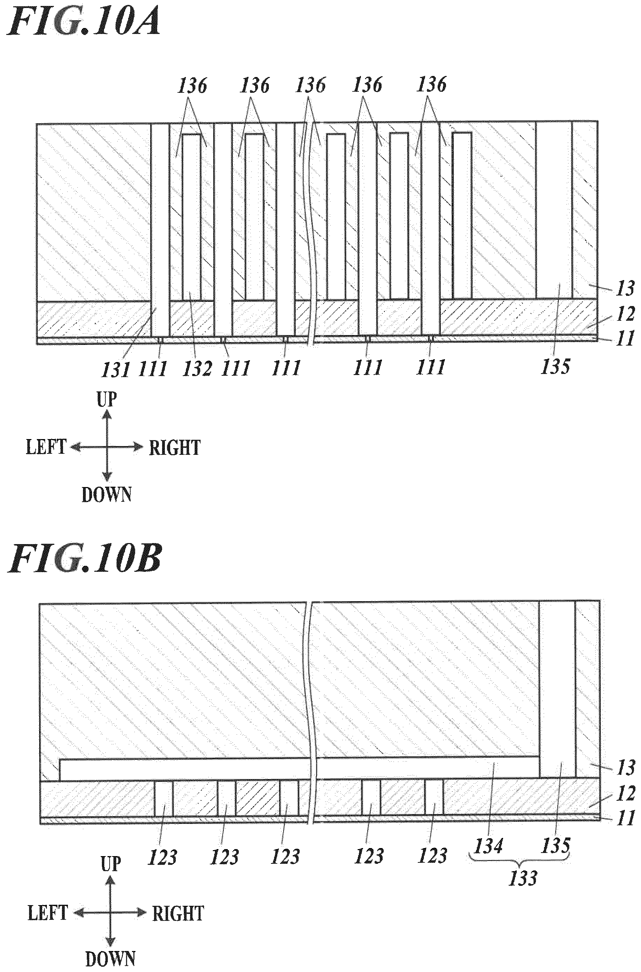

Each pressure chamber 131 and each air chamber 132 are formed to be separated from each other by a partition wall 136 as pressure generating means formed by a piezoelectric material (see FIG. 10A). The partition wall 136 is provided with a drive electrode that is not shown in the diagram, and these partition wall 136 and drive electrode constitute an actuator. When voltage is applied to this drive electrode, the partition wall 136 portion between adjacent pressure chambers 131 repeatedly undergoes displacement of shear mode type, and thereby pressure is applied to the ink in the pressure chamber 131. In the pressure chamber 131 shown in FIG. 5 to FIG. 10 and the like, the pressure chambers 131 located at the ends in the left-to-right direction, which have the partition wall 136 on only one side, are not used, and the other pressure chambers 131 having partition walls 136 on both sides are used.

With regard to the inkjet head 100 according to the present invention, it is preferable to perform so-called meniscus oscillation. The term meniscus oscillation involves continuously and repeatedly fluctuating the volume of the pressure chamber 131 to a certain extent based on an oscillating waveform and vibrating the meniscus (curved interface) formed by the ink in the nozzle 111 and the ink in the nozzle 111 and the pressure chamber 131, without ejecting the ink.

Here, the "oscillating waveform" is a drive pulse weaker than the contraction pulse performing liquid droplet ejection and is a contraction or expansion pulse that contracts or expands the volume of the pressure chamber to the extent that only pressure waves are generated, and the oscillating waveform is a waveform for oscillating the interface of the liquid in the nozzle for the purpose of suppressing clogging (decap), which is caused as the liquid (ink) in the vicinity of the nozzle dries to increase the viscosity.

Therefore, since the ink in the nozzle 111 is stirred by performing nozzle circulation and meniscus oscillation when ink is not ejected (at the time of non-printing), nozzle clogging caused by sedimentation and ejection failure by ink viscosity increase in the nozzle 111 can be suppressed when ejection (printing) is performed next time, and a decrease in the ejection velocity can be suppressed.

Specifically, an oscillating waveform that has a smaller voltage than the drive waveform for ejecting ink through the nozzle 111 and vibrates the interface of the ink inside the pressure chamber 131, is applied by the actuator (partition wall 136, a drive electrode, and the like) that imparts pressure to the ink in the pressure chamber 131.

Only the pressure chambers 131 may be formed without providing the air chambers 132; however, as described above, it is preferable to alternately provide the pressure chambers 131 and the air chambers 132. As a result, the pressure chambers 131 can be avoided from being adjacent to each other, and therefore, when the partition wall 136 adjacent to one pressure chamber 131 is deformed, other pressure chambers 131 can be prevented from being affected.

A common ink discharging path 133 is configured such that a first common ink discharging path 134 and a second common ink discharging path 135 are connected (see FIG. 5, FIG. 6B, and the like).

The first common ink discharging paths 134 are provided on the lower surface side of the pressure chamber substrate 13 so as to avoid the portion where the pressure chambers 131 and the air chambers 132 are provided, and three rows of the first common ink discharge paths 134 are provided to line up along the left-to-right direction on the front side and rear side of the head chip 1 and in the central part thereof. On the lower surface side of the first common ink discharge paths 134, a plurality of individual ink discharging paths 121 provided on the flow path spacer substrate 12 are connected, and the ink flowing in from those individual ink discharging paths (second individual ink discharging paths 123) can join at the first common ink discharging paths 134 (FIG. 6B, FIG. 7A, and FIG. 9A). Furthermore, the first common ink discharging paths 134 are connected to the second common ink discharging paths 135 that can discharge ink to the outside of the head chip 1 in the vicinity of the right end. Therefore, the first common ink discharging path 134 serves as a flow path in which the ink flowing in from the individual ink discharging paths 121 (second individual ink discharging paths 123) flows toward the second common ink discharging paths 135.

The second common ink discharging paths 135 are formed along the up-to-down direction in the same manner as in the case of the pressure chambers 131. A second common ink discharging path 135 communicates with the first common ink discharging path 134 on the lower surface side of the pressure chamber substrate 13 and communicates with a discharging liquid chamber 57 on the upper surface side, so that the second common ink discharging path 135 serves as a flow path for directing the ink that has flowed in from the first common ink discharging path 134 toward the upside (opposite side of the nozzle substrate 11 side) and discharging the ink to the outside of the head chip 1. Furthermore, the second common ink discharging path 135 is provided in the vicinity of the right end of the head chip 1 and communicates with the first common ink discharging path 134. As the second common ink discharging path 135 is provided to have a larger volume than the individual pressure chambers 131, the ink discharging efficiency can be increased.

On the flow path spacer substrate 12, pressure chambers 131 and individual ink discharging paths 121 provided to be branched from the pressure chambers 131 are formed (see FIG. 9A, FIG. 9B, and the like).

Each pressure chamber 131 is formed along the up-to-down direction so as to have an approximately rectangular-shaped cross-section with the same area, extending through the flow path spacer substrate 12 and the pressure chamber substrate 13.

Each individual ink discharging path 121 has one end connected to the pressure chamber 131 and the other end connected to the first common ink discharging path 134 and serves as a flow path that discharges the ink in the pressure chamber 131 to the first common ink discharging path 134.

Two or more individual ink discharging paths 121 are provided for the ejection opening of each nozzle 111, from the viewpoint of facilitating the discharge of air bubbles, foreign materials, and the like together with the ink. That is, at least two or more individual ink discharging paths 121 are provided for each of the pressure chambers 131. For example, as shown in FIG. 9A and FIG. 9B, a total of two individual ink discharging paths 121 are provided, one each in the front direction and the rear direction of the pressure chamber 131, and it is preferable because an effect of facilitating the discharge of air bubbles, foreign materials, and the like together with the ink can be obtained, and the production efficiency is also high.

It is preferable that the flow path spacer substrate 12 is a substrate made of silicone, stainless steel (SUS), or Alloy 42, from the viewpoint that processing of the individual ink discharging paths 121 is easier (highly accurate) and from the viewpoint that since thermal conductivity is high, the ink temperature can be easily maintained uniformly. Above all, it is preferable to use a substrate of a material having a coefficient of thermal expansion close to that of the material forming the pressure chamber substrate 13.

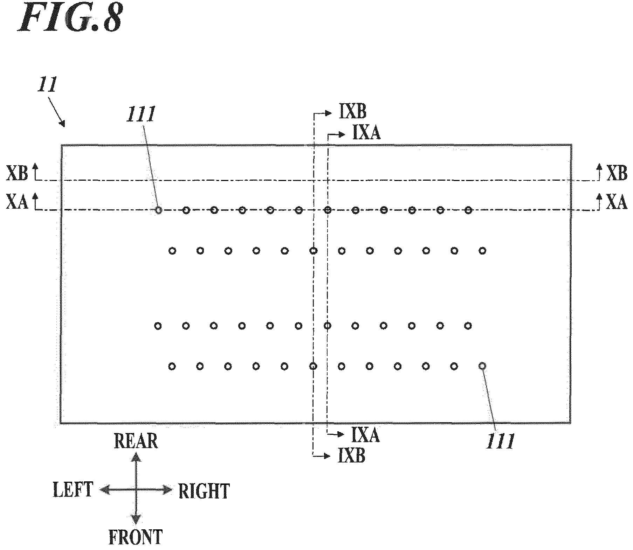

The nozzle substrate 11 is provided with nozzles 111, which are holes penetrating through in the thickness direction (up-to-down direction) (see FIG. 8). The nozzles 111 communicate with the pressure chambers 131 and serve as injection ports (ejection openings), through which the ink stored in the pressure chambers 131 is injected when pressure is applied to the ink in the pressure chambers 131. The nozzles 111 according to the present embodiment are arranged in the left-to-right direction and are lined up in four rows in the front-to-rear direction.

It is also preferable that the nozzle substrate 11 constitutes one of the flow path walls of the first individual ink discharging paths 122, as shown in FIG. 9A, FIG. 9B, and the like. Since the nozzle substrate 11 has a small thickness, the nozzle substrate 11 can function as a damper capable of changing the volume of the flow paths by undergoing slight elastic deformation due to pressure.

Regarding the nozzle substrate 11, it is preferable to use a substrate formed from a polyimide resin, a polyethylene terephthalate resin, a polyamide resin, a polysulfone resin, or the like. As a result, the nozzle substrate 11 can be produced by processing a resin substrate with high accuracy by laser processing, and the nozzle substrate 11 acquires excellent ink resistance, which is preferable. Furthermore, since such a resin substrate is highly elastic, the resin substrate can be suitably used as a flow path wall of the first individual ink supply paths.

The nozzle substrate 11 can also be produced by etching processing a silicone substrate.

Furthermore, it is preferable that the flow path surfaces of the pressure chambers 131, the individual ink discharging paths 121, and the common ink discharging paths 133, which serve as flow paths of the ink in the head chip 1, are provided with protective films having ink resistance, from the viewpoint of protecting the flow paths.

The protective films are not particularly limited as long as they have ink resistance; however, it is preferable to use, for example, a film containing polyparaxylylene or a derivative thereof (hereinafter, referred to as Parylene film).

A Parylene film is a resin coating film formed from a paraxylylene resin or a derivative resin thereof and can be formed by, for example, a Chemical Vapor Deposition method (CVD method) using a solid diparaxylylene dimer or a derivative thereof as a vapor deposition source. That is, paraxylylene radicals generated by vaporization and thermal decomposition of the diparaxylylene dimer are adsorbed on the surface of flow path members and metal layers, undergo a polymerization reaction, and form a coating film.

Parylene films include Parylene films having various performances, and depending on the required performance and the like, various Parylene films, Parylene films having a multilayer configuration obtained by laminating a plurality of those various Parylene films, or the like can be applied as desired Parylene films. It is preferable that the layer thickness of the Parylene film is adjusted in the range of 5 to 20 $\mu$m, from the viewpoint of obtaining the effects of excellent insulating properties and ink resistance.

Polyparaxylylene is a crystalline polymer having a molecular weight as high as 500000 and generates paraxylylene radicals by sublimating and thermally decomposing the raw material paraxylylene dimer. Paraxylylene radicals attach to the spacer substrate 40 and are simultaneously polymerized to produce polyparaxylylene, thereby forming a protective film.

Examples of the polyparaxylylene include PARYLENE N (trade name, manufactured by Parylene Japan K.K.).

Examples of a polyparaxylylene derivative include PARYLENE C (trade name, manufactured by Parylene Japan K.K.) in which one chlorine atom is substituted on a benzene ring, PARYLENE D (trade name, manufactured by Parylene Japan K.K.) in which chlorine atoms are substituted at the 2-position and the 5-position of a benzene ring, and PARYLENE HT (trade name, manufactured by Parylene Japan K.K.) in which hydrogen atoms of a methylene group connecting benzene rings are substituted by fluorine atoms.

Regarding the polyparaxylylene of the present embodiment and a derivative of polyparaxylylene, among these, it is preferable to use PARYLENE N or PARYLENE C, from the viewpoint of obtaining the effects of excellent insulation properties and ink resistance with the above-mentioned layer thickness.

The first individual ink discharging paths 122 of the present embodiment are provided in a lower surface side portion of the flow path spacer substrate 12; however, the embodiment is not limited to this. For example, the first individual ink discharging paths 122 may be provided to straddle both the nozzle substrate 11 and the flow path spacer substrate 12, may be provided only in the nozzle substrate 11, or may be provided slightly upper to the bottom face of the flow path spacer substrate 12 so as not to be adjacent to the nozzle substrate 11.

On the upper surface of the head chip 1, as shown in FIG. 4, the wiring substrate 2 is arranged, and two flexible substrates 3 connected to the drive circuit substrate 4 are arranged at both ends along the front-to-rear direction of the wiring substrate 2.

The wiring substrate 2 is formed into an approximately rectangular plate shape elongated in the left-to-right direction and has an opening 22 in an approximately central part thereof. The widths in the left-to-right direction and the front-to-rear direction of the wiring substrate 2 are respectively formed to be larger than the widths of the head chip 1.

The opening 22 is formed into an approximately rectangular shape elongated in the left-to-right direction, and in a state in which the head chip 1 is mounted on the wiring substrate 2, the inlet port of each of the pressure chambers 131 and the outlet port of the second common ink discharging path 135 in the head chip 1 are exposed upward.

The flexible substrate 3 electrically connects the drive circuit substrate 4 and the electrodes of the wiring substrate 2, and signals from the drive circuit substrate 4 can be applied to the drive electrodes provided on the partition walls 136 within the head chip 1 through the flexible substrate 3.

Furthermore, the lower end of the manifold 5 is attached and fixed to the outer edge of the wiring substrate 2 by adhesion. That is, the manifold 5 is disposed on the inlet port side (upper side) of the pressure chambers 131 of the head chip 1 and is connected to the head chip 1, with the wiring substrate 2 interposed therebetween.

The manifold 5 is a member obtained by molding a resin and is provided in the upper part of the pressure chambers 131 of the head chip 1 to store the ink introduced into the pressure chambers 131. Specifically, as shown in FIG. 3B and the like, the manifold 5 is formed to be elongated in the left-to-right direction and includes a hollow-shaped main body 52 constituting the ink reservoir 51 and first to fourth ink ports 53 to 56 constituting the ink flow path. Furthermore, the ink reservoir 51 is compartmented into two, that is, a first liquid chamber 51a on the upper side and a second liquid chamber 51b on the lower side, by a filter F for removing contaminants in the ink.

The first ink port 53 communicates with the upper right end of the first liquid chamber 51a and is used for introducing ink into the ink reservoir 51. A first joint 81a is externally inserted at the tip of the first ink port 53.

The second ink port 54 communicates with the upper left end of the first liquid chamber 51a and is used for removing air bubbles in the first liquid chamber 51a. Furthermore, a second joint 81b is externally inserted at the tip of the second ink port 54.

The third ink port 55 communicates with the upper left end of the second liquid chamber 51b and is used for removing air bubbles in the second liquid chamber 51b. Furthermore, a third joint 82a is externally inserted at the tip of the third ink port 55.

The fourth ink port 56 communicates with the discharging liquid chamber 57 that communicates with the second common ink discharging path 135 of the head chip 1, and the ink discharged from the head chip 1 is discharged to the outside of the inkjet head 100 through the fourth ink port 56.

The housing 6 is, for example, a member molded by a die cast method using aluminum as a material and is formed to be elongated in the left-to-right direction. The housing 6 is formed to be able to accommodate therein the manifold 5 on which the head chip 1, the wiring substrate 2, and the flexible substrate 3 are mounted, and the bottom face of the housing 6 is open. At both ends in the left-to-right direction of the housing 6, a mounting hole 68 for mounting the housing 6 to the printer main body side is formed at each end.

The cap-receiving plate 7 has a nozzle opening 71 formed in an approximately central part thereof, the nozzle opening 71 being elongated in the left-to-right direction, and is mounted so as to close the bottom opening of the housing 6 such that the nozzle substrate 11 is exposed through the nozzle opening 71.

[Ink circulation device]

The ink circulation device 8 is ink supply means for generating a circulation flow of the ink from the pressure chambers 131 to the individual ink discharging paths 121 inside the inkjet head 100. The ink circulation device 8 is configured to include a subtank for supply 81, a subtank for circulation 82, a main tank 83, and the like (see FIG. 11).

The subtank for supply 81 is filled with the ink to be supplied to the ink reservoir 51 of the manifold 5 and is connected to the first ink port 53 by an ink flow path 84.

The subtank for circulation 82 is filled with the ink discharged from the discharging liquid chamber 57 of the manifold 5 and is connected to the fourth ink port 56 by an ink flow path 85.

The subtank for supply 81 and the subtank for circulation 82 are provided at different positions in the up-to-down direction (direction of gravity) with respect to the nozzle surface (hereinafter, also referred to as "positional reference surface") of the head chip 1. As a result, a pressure P1 due to the water head difference between the positional reference surface and the subtank for supply 81 and a pressure P2 due to the water head difference between the positional reference surface and the subtank for circulation 82 are generated.

The subtank for supply 81 and the subtank for circulation 82 are connected to the ink flow path 86. Then, the ink can be returned from the subtank for circulation 82 to the subtank for supply 81 by the pressure applied by a pump 88.

The main tank 83 is filled with the ink to be supplied to the subtank for supply 81 and is connected to the subtank for supply 81 by an ink flow path 87. Then, the ink can be supplied from the main tank 83 to the subtank for supply 81 by the pressure applied by a pump 89.

The pressure P1 and pressure P2 can be adjusted by appropriately changing the amount of filled ink in each subtank and the position in the up-to-down direction (direction of gravity) of each subtank. The ink in the inkjet head 100 can be circulated at an adequate circulation flow velocity due to the pressure difference between the pressure P1 and the pressure P2. As a result, air bubbles, foreign materials, and the like generated inside the head chip 1 can be removed, and clogging of the nozzles 111, injection failure, and the like can be suppressed.

A method for controlling the circulation of ink by means of the water head difference has been described as an example of the ink circulation device 8; however, the ink circulation device 8 can be definitely appropriately modified as long as it has a configuration capable of generating a circulation flow of the ink.

FIG. 12 is a block diagram showing important functional configuration of an inkjet recording apparatus.

The inkjet recording apparatus 200 includes, as described above, a paper feeder 210, an image recorder 220 (a conveying drum 221, a transfer unit 222, a heater 223, a head unit 224, a fixer 225, and a deliverer 226), a paper discharger 230, an ink circulation device 8 as ink supply means, a controller 240, and the like.

The controller 240 is connected to each part constituting the inkjet recording apparatus 200 and controls each part constituting the inkjet recording apparatus 200. The controller 240 has a CPU 241, a RAM 242, a ROM 243, and the like. The CPU 241 reads and executes various programs, data, and the like according to the content of processing from a storage device such as the ROM 243 and controls the operation of each part of the inkjet recording apparatus 200 according to the content of executed processing. The RAM 242 temporarily stores various programs, data, and the like processed by the CPU 241. The ROM 243 stores various programs, data, and the like read out by the CPU 241 and the like.

Specifically, the controller 240 performs the following processing for the ink circulation device 8 of the inkjet recording apparatus 200.

That is, the controller 240 may control the ink flow rate (circulation flow rate Q) flowing through the flow path R communicating with the nozzles 111, that is, the circulation differential pressure $\Delta P$, so as to obtain an average shear rate of the flow paths R communicating with the nozzles 111 of 100 [1/s] or more.

Specifically, the pressure P1 and pressure P2 are adjusted by appropriately changing the pressure applied to the pump 88 of the ink circulation device 8, the amount of filled ink in the subtanks 81 and 82, and the positions in the up-to-down direction (direction of gravity) of the subtanks 81 and 82, and the circulation flow rate Q is controlled by the pressure difference (circulation differential pressure ∆P) between the pressure P1 and the pressure P2. It is preferable that the circulation differential pressure ∆P is adjusted in the range of 5 kPa to 30 kPa.

[Others]

The embodiments of the present invention described above should be considered illustrative in all respects and not restrictive. That is, the scope of the present invention is presented by the scope of the claims rather than the description given above and is intended to include all modifications within the scope of the claims.

As the head chip 1 of the present embodiment, an example in which the nozzle substrate 11, the flow path spacer substrate 12, and the pressure chamber substrate 13 are laminated in this order has been described; however, without being limited to this, a two-layer configuration of the nozzle substrate 11 and the pressure chamber substrate 13 may also be adopted. In this case, the individual ink discharging paths 121 may be provided in at least one of the nozzle substrate 11 and the pressure chamber substrate 13.

Furthermore, as the inkjet head 100 of the present embodiment, an example of the shear mode type has been described; however, the inkjet head 100 is not limited to this as long as means for applying pressure to the ink in the pressure chamber 131 is provided.

As the drawing method for the inkjet recording apparatus 200 of the present embodiment, an example of the single-pass drawing method using a line head has been described; however, without being limited to this, the drawing method may be a scan method.

As the head chip 1 of the present embodiment, an example of straight type in which the pressure chambers 131 and the second common ink discharging paths 135 are open at the upper and lower surfaces of the head chip 1 has been described; however, the head chip 1 is not limited to this. For example, a configuration in which the pressure chambers 131 and the second common ink discharging paths 135 are open at any one side face in the front-to-rear direction and the left-to-right direction of the head chip 1, or a configuration in which the flow paths have bent portions where the direction of ink flow changes in the middle of the flow paths, may also be adopted.

[Ink]

Next, the physical properties and composition of the inkjet ink (hereinafter, also simply referred to as "ink") used in the present invention will be described.

<Physical properties of inkjet ink>

With regard to the ink according to the present invention, it is preferable that the surface tension is in the range of 20 to 50 mN/m from the viewpoint of enhancing the ejection stability through the nozzles of the inkjet head, and from the viewpoint of enhancing wettability to the base material and forming images with higher definition, it is more preferable that the surface tension is in the range of 22 to 25 mN/m.

Regarding a method for measuring the surface tension, for example, Shin Jikken Kagaku Koza (Lectures on New Experimental Chemistry) Vol. 18 (Interface and Colloids), edited by Chemical Society of Japan, published by Maruzen Publishing Co., Ltd.: P. 68-117) can be referred to, and specifically, the surface tension can be determined by using a ring method (Du Nouy method) or a vertical plate method (Wilhelmy method) and can be measured with a multifunctional automatic surface tensiometer K100 (manufactured by KRUSS GmbH) or the like.

The surface tension of the ink can be adjusted to the above-described range by changing the types or amounts of the surfactant and water-soluble solvent that will be described below.

The ink according to the present invention satisfies the relationships of the above-described Formula (I) and Formula (II) when the viscosity at 25°C at a shear rate of 1 [1/s] is designated as A1, the viscosity at a shear rate of 100 [1/s] is designated as A100, and the viscosity at a shear rate of 1000 [1/s] is designated as A1000, It is more preferable that the ink according to the present invention satisfies the relationships of the above-described Formula (III) to Formula (V).

It is preferable that the ink according to the present invention contains a water-soluble solvent that will be described below, water, a pigment, a fixing resin, a thixotropy-imparting agent, and the like in order to satisfy the relationships of the above-described Formulas (I) and (II). Furthermore, it is preferable that the following conditions (1-1) and (1-2) are satisfied with regard to the viscosity characteristics.

(1-1) The viscosity (25°C) at a shear rate of 1000 [1/s] is 15 mPa·s or less.

(1-2) At an ink drying rate of 20%, the viscosity (25°C) at a shear rate of 1 [1/s] is 150 mPa·s or more.

Measurement of the viscosity in the above-described items (1-1) and (1-2) can be carried out by using a rotary viscometer in the same manner as in the case of the viscosity in the above-described Formula (I) and Formula (II). Examples of the rotary viscometer include MCR-102 manufactured by Anton Paar GmbH. In the present specification, unless particularly stated otherwise, the viscosity means a viscosity measured at 25°C.

According to the present specification, the "water-based solvent" refers to water or a solvent containing water and a water-soluble solvent. The water-soluble solvent is a solvent that is compatible with water at room temperature.

The "ink drying rate of 20%" indicates a state in which a water-based solvent has been removed from the inkjet ink so as to obtain a mass equivalent to 80% of the initial mass. The ink drying rate can be calculated by the following Formula (A) from the masses before and after drying the ink under the temperature conditions of 60°C.

$$\text{Formula (A)} \quad \text{Ink drying rate } [\%] = (W_{BEFORE} - W_{AFTER})/W_{BEFORE} \times 100$$

However, in Formula (A), $W_{BEFORE}$ represents the mass before drying of the ink (initial mass). $W_{AFTER}$ represents the mass after drying of the ink. Drying of the ink is specifically carried out by dropping about 100 mL of the ink on a glass substrate, weighing the glass substrate to determine the mass before drying of the ink, and then heating the glass substrate to 60°C on a hot plate capable of mass measurement.

In order to obtain a viscosity at an ink drying rate of 20%, the above-described drying may be stopped at a time point where the mass has reached 80% of the initial mass (mass before drying), and the viscosity may be measured by using the ink after drying thus obtained.

With regard to the condition (1-1), the ink according to the present invention is preferably such that the viscosity at a shear rate of 1000 [1/s] is 10 mPa·s or less. The lower limit of the viscosity at a shear rate of 1000 [1/s] is not particularly limited; however, from the viewpoint of inkjet ejectability, the lower limit is preferably about 5 mPa·s.

With regard to the condition (1-2), the ink according to the present invention is preferably such that the viscosity at a shear rate of 1 [1/s] with an ink drying rate of 20% is 300 mPa·s or more.

Here, when the viscosity at a shear rate of 1 [1/s] is at least 150 mPa·s, the occurrence of color mixing or the like at the time of landing of the ink on a base material can be suppressed. The viscosity of the ink increases as the ink drying rate becomes higher. When the ink according to the present invention is used, the viscosity at a shear rate of 1 [1/s] can reach 150 mPa·s by setting the ink drying rate to 20% at the highest. As a result, at the time of landing of the ink on the base material, the occurrence of color mixing or the like can be suppressed without excessively heating the ink.

Furthermore, it is preferable that the ink according to the present invention satisfies the following condition (1-3) in relation to the above condition (1-2).

(1-3) The viscosity (25°C) at a shear rate of 1 [1/s] is 25 mPa·s or more.

As described above, the viscosity of the ink increases as the ink drying rate becomes higher. Accordingly, it is considered that the viscosity of the ink at a shear rate of 1 [1/s] has correlation to a certain extent at an ink drying rate of 20%, with a state in which the ink is not dried at all. With regard to the condition (1-3), the ink according to the present invention is such that the viscosity at a shear rate of 1 [1/s] is more preferably 45 mPa·s or more, and even more preferably 100 mPa·s or more.

It is preferable that the ink according to the present invention further satisfies at least one, more preferably two or more, and even more preferably all, of the following conditions (1-4), (1-5), and (1-6).

(1-4) At an ink drying rate of 20%, the loss tangent (tan δ) at a strain of 1% when the strain is changed under the conditions of a temperature of 25°C, an angular frequency $\omega$ of 10 rad/s, and an oscillation angle $\gamma$ of 1% to 1000% is less than 1.

(1-5) At an ink drying rate of 20%, the crossover strain of the storage modulus and the loss modulus when the strain is changed under the conditions of a temperature of 25°C, an angular frequency $\omega$ of 10 rad/s, and an oscillation angle $\gamma$ of 1% to 1000% is 20% or more.

(1-6) The thixotropy index represented by n in the viscosity equation represented by the following Formula (2) is 0.85 or less.

$$\text{Formula (2)} \quad \eta a = \mu D^{n-1}$$

(in Formula (2), $\eta a$ represents the apparent viscosity; D represents the shear rate; and $\mu$ represents the non-Newtonian viscosity coefficient.)

The loss tangent (tan δ) in the condition (1-4) and the storage modulus and loss modulus in (1-5) can be measured by using a rheometer (viscoelasticity measuring device). Examples of the rheometer include MCR-102 manufactured by Anton Paar GmbH. In the present specification, the loss tangent may be simply indicated as "tan δ".

According to the present specification, tan δ, storage modulus, and loss modulus can be measured by using a rheometer, specifically by using MCR-102 manufactured by Anton Paar GmbH, in an oscillation mode under the measurement conditions of a temperature of 25°C, an angular frequency $\omega$ of 10 rad/s, and an oscillation angle $\gamma$ of 1% to 1000%. During the measurement, the measurement sample is distorted by changing the oscillation angle $\gamma$ of the cone plate of the rheometer. Here, since the measurement sample is distorted by following the oscillation angle $\gamma$, the oscillation angle $\gamma$ of the cone plate and the strain of the measurement sample have the same value.

In the condition (1-4), tan $\delta$ at a strain of 1% is used as an index for the above-described measurement. In these measurement conditions, when the tan $\delta$ at a strain of 1% is less than 1, the ink acquires more elastic properties, and when compared with an ink having the same viscosity, more favorable pinning properties are obtained, while the image quality is further improved. In the condition (1-4), the tan $\delta$ at a strain of 1% is more preferably 0.8 or less, and even more preferably 0.6 or less.

In the condition (1-5), the crossover strain of the storage modulus and the loss modulus when the strain is changed, is used as an index for the above-described measurement. The term "crossover strain" specifically represents the value of strain (%) at an intersection of a graph obtained by plotting logarithmic storage modulus (Pa) on the axis of ordinate and logarithmic strain (%) on the axis of abscissa and a graph obtained by plotting logarithmic loss modulus (Pa) on the axis of ordinate and logarithmic strain (%) on the axis of abscissa. When the crossover strain (%) under the measurement conditions is 20% or more, the ink acquires more elastic properties, and the image quality is further improved as described above. The crossover strain is more preferably 30% or more, and even more preferably 40% or more.

In the condition (1-6), the viscosity equation represented by Formula (2): $\eta a = \mu D^{n-1}$ is a formula representing the relationship between the apparent viscosity $\eta a$ (mPa·s) and the shear rate D [1/s]. The relationship between the apparent viscosity $\eta a$ (mPa·s) and the shear rate D [1/s] in the viscosity equation can be measured by using a rheometer, for example, MCR-102 manufactured by Anton Paar GmbH.

Specifically, the apparent viscosity $\eta a$ (mPa·s) is measured at a shear rate in the range of 1000 [1/s] to 1 [1/s] in the rotation mode of MCR102 at a temperature of 25°C, a time setting of 150 measurement points, and a measurement interval of 2 s. A graph plotting the logarithmic apparent viscosity $\eta a$ (mPa·s) on the axis of ordinate (Y-axis) and logarithmic shear rate D [1/s] on the axis of abscissa (X-axis) is produced, and the thixotropic index n is determined from the slope (n-1) of the graph. The intercept of the graph is the non-Newtonian viscosity coefficient $\mu$.

Here, the following decoy n is determined from the viscosity equation: $\eta a = \mu D^{n-1}$.

$$\log \eta a = \log (\mu D^{(n-1)})$$
$$= \log \mu + \log (D^{(n-1)})$$
$$= \log \mu + (n-1) \times \log D$$

When log $\eta a$ is plotted on the Y-axis, and log D is plotted on the X-axis, Y = (n-1)X + log $\mu$ is attained, and n can be calculated from the slope (n-1).

In the condition (1-6), when the thixotropic index is 0.85 or less, the viscosity during head circulation can be lowered, the rate of viscosity increase at the time of landing is fast, and the image quality is improved. Color mixing can be prevented more effectively when the printing speed is faster.

<Composition of inkjet ink>

The ink according to the present invention is an ink that satisfies the above-described relationships of Formula (I) and Formula (II), and it is preferable that the ink contains a water-based solvent (a water-soluble solvent and water), a pigment, and a fixing resin, while it is particularly preferable that the ink contains a thixotropy-imparting agent.

It is preferable that the ink according to the present invention contains a pigment in an amount in the range of 3% to 10% by mass, a fixing resin in an amount in the range of 8% to 20% by mass, a water-soluble solvent in an amount in the range of 10% to 30% by mass, and water in an amount in the range of 40% to 79% by mass.

It is also preferable that the ink according to the present invention has a solid content of 6% to 30% by mass. The "solid content of the ink" refers to solid-state components that cannot be removed from the ink by drying at 100°C. The solid content of the ink is, for example, components other than the solvent including a water-based solvent.

The ink according to the present invention can contain optional components that do not impair the effects of the present invention, in addition to the above-described water-based solvent, pigment, fixing resin, and thixotropy-imparting agent. Examples of the optional components include a pigment dispersant and a surfactant. Each component in the ink according to the present invention will be described below.

(Thixotropy-imparting agent)

The thixotropy-imparting agent is not particularly limited as long as it is a material capable of imparting thixotropic properties that satisfy the above-described conditions (I) and (II) to the ink.

It is preferable that the thixotropy-imparting agent has a particle shape (provided that the particle shape includes a fiber shape), and it is more preferable that the aspect ratio is 20 or higher.

The shape in the case where the thixotropy-imparting agent has a particle shape is preferably an elliptical shape, a scale shape, a plate shape, a needle shape, a fiber shape, or the like. The aspect ratio representing the ratio of the major axis to the minor axis of the thixotropy-imparting agent is preferably 20 or higher. When the aspect ratio is 20 or higher, thixotropic properties are easily imparted by the ink. The major axis of the thixotropy-imparting agent is preferably 2 $\mu$m or less. When the major axis of the thixotropy-imparting agent is greater than 2 $\mu$m, the inkjet ejectability may be affected.

According to the present specification, a cross-section for measuring the aspect ratio of the thixotropy-imparting agent is a cross-section that is parallel to the length direction of a particle and is cut along the thickness direction. The aspect ratio is a value determined from the average particle major axis and the average particle minor axis of fifty particles obtainable from the cross-section. Here, when the particle shape is a scale shape or a plate shape, the minor axis is the thickness of a particle, and the major axis is the length of a longer side or the maximum diameter of a cross-section orthogonally intersecting the thickness direction of the particle, in other words, when the particle is viewed in a plan view. When the particle shape is a needle shape or a fiber shape, the major axis is the length of the particle, and the minor axis is the major axis or the maximum width of a cross-section orthogonally intersecting the length direction of the particle, in other words, when the particle is viewed in a plan view.

Examples of the material for the thixotropy-imparting agent include a polysaccharide and inorganic particles. Specific examples of the polysaccharide include cellulose, chitin, chitosan, xanthan gum, welan gum, succinoglycan, guar gum, locust bean gum and derivatives thereof, glycomannan, agar, and carrageenan. Examples of the derivatives include, as derivatives of cellulose, methyl cellulose, hydroxyethyl cellulose, and carboxymethyl cellulose.

The polysaccharide is preferably a naturally occurring polysaccharide having a weight average molecular weight of about several millions. Specifically, xanthan gum, guar gum, carrageenan, and the like are preferred.

In the ink according to the present invention, nanofibers of a polysaccharide obtained by treating aggregates of a polysaccharide, such as wood and shells of crustaceans such as crabs and shrimps, by conventionally known methods such as an oxidation treatment using a catalyst, a mechanical treatment using a grinder or the like, and extremely finely unraveling the resulting fibers to be micronized, are preferably used as the thixotropy-imparting agent. The polysaccharide for the nanofibers of the polysaccharide is preferably at least one of cellulose, chitin, and chitosan, and more preferably cellulose.

In the present specification, the term nanofiber means a fiber having a width of about 1 to 100 nm and an aspect ratio of 100 or higher. The length and width of a nanofiber can be measured by, for example, using an electron microscope. With regard to the width of a nanofiber, for example, the width in a plan view may be measured, or the diameter of a cross-section orthogonally intersecting the length direction of the nanofiber may be measured as the width. In all cases, for fifty nanofibers, the average of the largest width in each nanofiber is referred to as the "width" of the nanofiber. The "length" of the nanofibers is an average length of fifty nanofibers. The aspect ratio of the nanofibers can be determined as the value obtained by dividing the length by the width.

With regard to the ink according to the present invention, when nanofibers of a polysaccharide are used as the thixotropy-imparting agent, nanofibers having a smaller size are preferred. The width of the nanofibers is preferably 1 to 50 nm, and more preferably 1 to 5 nm. The length of the nanofibers is preferably 0.5 to 2 $\mu$m, and more preferably 0.5 to 1 $\mu$m; however, the length is not limited to this. The aspect ratio of the nanofibers is more preferably in the range of 20 to 400, and even more preferably in the range of 100 to 300.

In the aggregates of a polysaccharide, the polysaccharide such as cellulose, chitin, or chitosan exist in a state in which structural units called microfibrils are bound to one another. These microfibrils have a width of 3 to 4 nm and a length of several $\mu$m (for example, 2 to 5 $\mu$m); however, it is difficult to unravel one by one. When the aggregates of a polysaccharide are mechanically pulverized, nanofibers having a width of about 20 to 50 nm are obtained in many conventional methods. According to the present invention, such nanofibers may be used as the nanofibers of a polysaccharide; however, it is more preferable to use TEMPO-oxidized nanofibers that are more finely unraveled, for example, unraveled into microfibril units, by TEMPO oxidation.

"TEMPO oxidation" is an oxidation reaction using 2,2,6,6-tetramethyl-1-piperidine-oxy radical (TEMPO) as a catalyst. By oxidizing aggregates of a polysaccharide in the presence of TEMPO, extremely fine nanofibers corresponding to microfibrils, for example, having a width of 3 to 4 nm and a length of several $\mu$m (for example, 2 to 5 $\mu$m), are obtained.

The cellulose nanofibers used as the thixotropy-imparting agent are products obtained by nanofiberizing cellulose. Examples of the nanofiberized form of cellulose include powdered cellulose and microcrystalline cellulose.

Regarding the cellulose nanofibers, RHEOCRYSTA (registered trademark) manufactured by DKS Co., Ltd.; TEMPO-oxidized cellulose nanofibers, CELLENPI TC-01A and CELLENPIA TC-02X ("CELLENPIA" is registered trademark) manufactured by Nippon Paper Industries Co., Ltd.; IMA-10002, BMa-10002, WMa-10002, AMa-10002, and FMa-10002 manufactured by Sugino Machine Limited; ELEX- * and ELEX-S manufactured by Daio Paper Corporation; AURO VISCO manufactured by Oji Paper Co., Ltd.; and the like can be suitably utilized.

The inorganic particles are not limited as long as they are particles having a material and a shape, which can impart thixotropic properties satisfying the above-described conditions (1-1) and (1-2) to the ink; however, various natural or synthetic clay mineral particles are preferred.

The clay mineral is preferably a smectite clay mineral. Smectite clay minerals are classified as phyllosilicates of layered silicate minerals or bentonite group minerals. Smectite clay minerals are classified into a montmorillonite subgroup and a saponite subgroup according to the layered structure. The montmorillonite subgroup includes montmorillonite, nontronite, or beidellite. The saponite subgroup includes hectorite, saponite, or sauconite.

The smectite clay mineral may be a natural substance or a synthetic substance. The smectite clay mineral is a layered substance in which plate-shaped bodies are laminated, and when used as a thixotropy-imparting agent, the smectite clay mineral is usually used as delaminated plate-shaped particles. When the smectite clay mineral is a synthetic substance, the substance has a smaller aspect ratio and a smaller impurities content as compared with natural substances.

It is preferable that the plate-shaped particles of the smectite clay mineral have a thickness in the range of 0.2 to 3.0 nm and a length in the range of 10 to 150 nm. It is more preferable that the plate-shaped particles have a thickness in the range of 0.2 to 2.0 nm and a length in the range of 10 to 125 nm. The aspect ratio is a value obtained by dividing the length of the plate-shaped particles by the thickness and is preferably 20 or higher. It is more preferable that the aspect ratio is in the range of 20 to 200.

The length and thickness of plate-shaped particles can be measured by, for example, using an electron microscope. The thickness of the plate-shaped particles is, for example, an average value of the thicknesses of fifty plate-shaped particles measured at a predetermined cross-section. The "length" of the plate-shaped particles is an average value of fifty lengths measured as the maximum diameter when the plate-shaped particles are viewed in a plan view. The aspect ratio of the plate-shaped particles can be determined as a value obtained by dividing the length by the thickness.

As the smectite clay mineral, for example, Laponite (manufactured by BYK Chemie GmbH), which is a synthetic layered silicate, can be used. Laponite is a synthetic low-charge clay whose structure and chemical composition are close to those of hectorite, which is a natural smectite clay mineral. Main particles of Laponite are in a disc-shaped form having a maximum diameter of 30 nm and a thickness of 1 nm.

A commercially available product may be used as the smectite clay mineral. Examples of the commercially available product include LAPONITE RD (manufactured by BYK Chemie GmbH); and KUNIPIA F and KUNIPIA G, which are purified bentonites manufactured by KUNIMINE INDUSTRIES CO., LTD.

Furthermore, alumina nanofibers (having a minor axis of 4 nm and a major axis of 1400 nm) manufactured by Kawaken Fine Chemicals Co., Ltd., which are nanofibers, may also be used as the inorganic particles.

The content of the thixotropy-imparting agent in the ink according to the present invention is preferably in the range of 0.01% to 1% by mass, and more preferably in the range of 0.08% to 0.5% by mass, with respect to the total amount of the ink.

With regard to the ink according to the present invention, the thixotropy-imparting agent may be used singly, or two or more kinds thereof may be used in combination. With regard to the ink according to the present invention, it is preferable that the thixotropy-imparting agent is formed from two or more kinds of materials. Furthermore, it is preferable that one of the two or more materials is a smectite clay mineral. Examples of a preferred combination of the thixotropy-imparting agent include a combination of cellulose nanofibers and a smectite clay mineral and a combination of xanthan gum and a smectite clay mineral. Particularly, a combination of cellulose nanofibers and a smectite clay mineral is preferred.

It is considered that the cellulose nanofibers and the smectite clay mineral can impart elastic properties to the ink, even when they are each used alone, for example, by forming a specific gel structure at an ink drying rate of 20%. As a result, an ink containing cellulose nanofibers or a smectite clay mineral can easily achieve the conditions (1-4) and (1-5). Furthermore, when cellulose nanofibers and a smectite clay mineral are used in combination, the above-described elastic properties can be further enhanced, which is preferable.

The ratio of the smectite clay mineral and the other thixotropy-imparting agent can be selected according to the ink viscosity and the thixotropic properties, and the ratio of smectite clay mineral : other thixotropy-imparting agent can be adjusted in the range of 10 : 1 to 1 : 10 as a mass ratio. By combining the substances, the thixotropic properties of the ink are significantly improved, and the image quality is improved, as compared with the case of adding each of the substances in a simple form. The reason why the thixotropic properties are improved is assumed to be that the smectite clay mineral has an electric charge so that the smectite clay mineral and the other thixotropy-imparting agent are electrically associated to form a structure.

(Pigment)

As the pigment contained in the ink according to the present invention, conventionally known organic and inorganic pigments can be used. Examples thereof include azo pigments such as an azo lake, an insoluble azo pigment, a condensed azo pigment, and a chelate azo pigment; polycyclic pigments such as a phthalocyanine pigment, perylene and a perylene pigment, an anthraquinone pigment, a quinacridone pigment, a dioxanzine pigment, a thioindigo pigment, an isoindolinone pigment, and a quinophthaloni pigment; dye lakes such as a basic dye lake and an acidic dye lake; organic pigments such as a nitro pigment, a nitroso pigment, aniline black, and a daylight fluorescent pigment; and inorganic pigments such as carbon black.

Specific examples of the organic pigment that can be preferably used include the following pigments.

Examples of pigments for magenta or red color include C.I. Pigment Red 2, C.I. Pigment Red 3, C.I. Pigment Red 5, C.I. Pigment Red 6, C.I. Pigment Red 7, C.I. Pigment Red 15, C.I. Pigment Red 16, C.I. Pigment Red 48:1, C.I. Pigment Red 53:1, C.I. Pigment Red 57:1, C.I. Pigment Red 122, C.I. Pigment Red 123, C.I. Pigment Red 139, C.I. Pigment Red 144, C.I. Pigment Red 149, C.I. Pigment Red 166, C.I. Pigment Red 177, C.I. Pigment Red 178, C.I. Pigment Red 202, C.I. Pigment Red 222, and C.I. Pigment Violet 19.

Examples of pigments for orange or yellow color include C.I. Pigment Orange 31, C.I. Pigment Orange 43, C.I. Pigment Yellow 12, C.I. Pigment Yellow 13, C.I. Pigment Yellow 14, C.I. Pigment Yellow 15, C.I. Pigment Yellow 15:3, C.I. Pigment Yellow 17, C.I. Pigment Yellow 74, C.I. Pigment Yellow 93, C.I. Pigment Yellow 128, C.I. Pigment Yellow 94, C.I. Pigment Yellow 138, and C.I. Pigment Yellow 155. Particularly, in view of the balance between color tone and light resistance, C.I. Pigment Yellow 155 is preferred.

Examples of pigments for green or cyan color include C.I. Pigment Blue 15, C.I. Pigment Blue 15:2, C.I. Pigment Blue 15:3, C.I. Pigment Blue 16, C.I. Pigment Blue 60, and C.I. Pigment Green 7.

Examples of pigments for black color include C.I. Pigment Black 1, C.I. Pigment Black 6, and C.I. Pigment Black 7.

The content of the pigment in the ink is not especially limited; however, for an inorganic pigment, the content is preferably in the range of 7% to 18% by mass, and for an organic pigment, a content in the range of 0.5% to 7% by mass is a preferred range.

(Pigment dispersant)

The ink according to the present invention optionally contains a pigment dispersant in order to disperse the pigment. The pigment dispersant is not especially limited; however, a polymer dispersant having an anionic group is preferred, and a dispersant having a number average molecular weight in the range of 5000 to 200000 can be suitably used.

Examples of the pigment dispersant include block copolymers and random copolymers having a structure derived from two or more kinds of monomers selected from styrene, a styrene derivative, a vinylnaphthalene derivative, acrylic acid, an acrylic acid derivative, maleic acid, a maleic acid derivative, itaconic acid, an itaconic acid derivative, fumaric acid, and a fumaric acid derivative, salts of these copolymers, polyoxyalkylenes, and polyoxyalkylene alkyl ethers.

It is preferable that the pigment dispersant has an acryloyl group, and it is preferable that the pigment dispersant is neutralized with a neutralizing base and then added. Here, the neutralizing base is not particularly limited but is preferably an organic base such as ammonia, monoethanolamine, diethanolamine, triethanolamine, or morpholine.

The amount of addition of the pigment dispersant is preferably in the range of 10% to 100% by mass, and more preferably in the range of 10% to 40% by mass, with respect to the pigment.

It is particularly preferable that the pigment is in the form of so-called capsule pigment, in which the pigment is coated with the above-described pigment dispersant. As a method for coating the pigment with a pigment dispersant, various known methods can be used; however, preferred examples include a phase inversion emulsification method, an acid precipitation method, and a method of dispersing the pigment by means of a polymerizable surfactant, supplying monomers thereto, and coating the pigment while polymerizing the monomers.

As a particularly preferred method, a method of dissolving a pigment dispersant in an organic solvent such as methyl ethyl ketone, partially or completely neutralizing acidic groups in the resin with a base, subsequently adding a pigment and ion-exchanged water thereto, dispersing the mixture, subsequently removing the organic solvent, and adding water as necessary to prepare the capsule pigment, may be mentioned.

The average particle size in a dispersed state of the pigment in the ink is preferably 50 nm or more and less than 200 nm. As a result, the dispersion stability of the pigment can be improved, and the storage stability of the ink can be improved. The measurement of the particle size of the pigment can be determined by means of commercially available particle size measuring equipment using a dynamic light scattering method, an electrophoresis method, or the like; however, measurement according to a dynamic light scattering method is convenient and can measure the particle size region with high accuracy.

The pigment can be used after being dispersed by a dispersing machine together with a pigment dispersant and other additives according to all desired purposes.

Regarding the dispersing machine, a ball mill, a sand mill, a line mill, a high pressure homogenizer, and the like, which are conventionally known, can be used. Among them, when the pigment is dispersed by using a sand mill, it is preferable because a sharp particle size distribution is obtained. The material of the beads used for sand mill dispersion is not especially limited; however, from the viewpoint of preventing generation of bead fragments and contamination of ion components, the material is preferably zirconia or zircon. The diameter of these beads is preferably in the range of 0.3 to 3 mm.

(Water-based solvent)

The ink according to the present invention contains a water-based solvent. The water-based solvent contains water as an essential solvent and preferably includes an optional known water-soluble solvent for the purpose of viscosity adjustment or the like.

The water to be included in the ink according to the present invention is not particularly limited and may be ion-exchanged water, distilled water, or pure water.

Examples of the water-soluble solvent contained in the ink include an alcohol, a polyhydric alcohol, an amine, an amide, a glycol ether, and a 1,2-alkanediol having 4 or more carbon atoms.

Examples of the alcohol include methanol, ethanol, 1-propanol, 2-propanol, 1-butanol, 2-butanol, 2-methyl-1-propanol, t-butanol, 3-methoxy-1-butanol, 3-methoxy-3-methylbutanol, 1-octanol, 2-octanol, n-nonyl alcohol, tridecyl alcohol, n-undecyl alcohol, stearyl alcohol, oleyl alcohol, and benzyl alcohol.

Examples of the polyhydric alcohol include ethylene glycol, diethylene glycol, triethylene glycol, tetraethylene glycol, a polyethylene glycol having 5 or more ethylene oxide groups, propylene glycol, dipropylene glycol, tripropylene glycol, a polypropylene glycol having 4 or more propylene oxide groups, butylene glycol, hexanediol, pentanediol, glycerin, hexanetriol, and thiodiglycol.

Examples of the amine include ethanolamine, diethanolamine, triethanolamine, N-methyldiethanolamine, N-ethyldiethanolamine, morpholine, N-ethylmorpholine, ethylenediamine, diethylenediamine, triethylenetetramine, tetraethylenepentamine, polyethyleneimine, pentamethyldiethylenetriamine, and tetramethylpropylenediamine.

Examples of the amide include formamide, N,N-dimethylformamide, and N,N-dimethylacetamide.

Examples of the glycol ether include ethylene glycol monoethyl ether, ethylene glycol monobutyl ether, diethylene glycol monoethyl ether, diethylene glycol monobutyl ether, triethylene glycol monobutyl ether, propylene glycol monopropyl ether, dipropylene glycol monomethyl ether, and tripropylene glycol monomethyl ether.

Examples of the 1,2-alkanediol having 4 or more carbon atoms include 1,2-butanediol, 1,2-pentanediol, 1,2-hexanediol, and 1,2-heptanediol.

A particularly preferably used water-soluble solvent is a polyhydric alcohol, which can suitably suppress bleeding during high-speed printing. Specifically, ethylene glycol, diethylene glycol, triethylene glycol, tetraethylene glycol, propylene glycol, dipropylene glycol, and tripropylene glycol are preferred.

The ink can contain one kind or a combination of two or more kinds selected from these water-soluble solvents.

(Fixing resin)

The ink according to the present invention optionally contains a fixing resin. The fixing resin functions as a binder for the pigment as a colorant and has a function of improving the adhesiveness of the coating film to a base material, particularly a non-absorbent base material and improving the abrasion resistance of a coating film obtained by using the ink. The fixing resin is preferably a water-insoluble resin. It is preferable that the water-insoluble resin as the fixing resin is used in a state of fine particles dispersed in a water-based solvent.

Fine particles of the water-insoluble resin have a form in which a resin that is originally water-insoluble is dispersed as microscopic fine particles in a water-based solvent. These fine particles may have a form in which, for example, a water-insoluble resin is forcedly emulsified by using an emulsifier or the like and dispersed as fine particles in a water-based solvent. Alternatively, the fine particles may also be a product obtained by introducing a hydrophilic functional group into the molecules of a water-insoluble resin and forming fine particles that are stable by themselves in a water-based solvent without using an emulsifier or a dispersion stabilizer, that is, a self-emulsification product. Regarding the water-based solvent in which fine particles of the water-insoluble resin are dispersed, a water-based solvent similar to those described above can be used, and usually, water or a water-alcohol mixed solvent is used. Hereinafter, fine particles of a water-insoluble resin dispersed in a water-based solvent are referred to as an aqueous dispersion.

According to the present invention, the term "water-insoluble" implies that when a resin is dried at 105°C for 2 hours and then dissolved in 100 g of water at 25°C, the amount of dissolution of the resin is 10 g or less, preferably 5 g or less, and more preferably 1 g or less. However, when the resin has a salt-forming group, the amount of dissolution is the amount of dissolution when the salt-forming group of the resin is 100% neutralized with acetic acid or sodium hydroxide, depending on the type of the salt-forming group.

The fixing resin according to the present invention is preferably a polyester resin, a polyurethane resin, a polyacrylic resin, and the like, which are water-insoluble resins. As the fixing resin according to the present invention, one kind of these may be used alone, or two or more kinds thereof may be used in combination.

It is preferable that the fixing resin is contained in an amount in the range of 3% to 10% by mass with respect to the total mass (100% by mass) of the ink, and it is preferable that the fixing resin is contained in an amount in the range of 4% to 7% by mass, from the viewpoint of enhancing the fixability of the coating film to the base material without impairing the effects of the present invention.

(Polyester resin)

The polyester resin that is used as the fixing resin can be obtained by using a polyhydric alcohol component and a polyvalent carboxylic acid component such as a polyvalent carboxylic acid, a polyvalent carboxylic acid anhydride, or a polycarboxylic acid ester.

Examples of the polyhydric alcohol component include dihydric alcohols (diols), specifically alkylene glycols having a carbon number in the range of 2 to 36 (ethylene glycol, 1,2-propylene glycol, 1,3-propylene glycol, 1,4-butylene glycol, 1,6-hexanediol, and the like), alkylene ether glycols having a carbon number in the range of 4 to 36 (diethylene glycol, triethylene glycol, dipropylene glycol, polyethylene glycol, polypropylene glycol, polybutylene glycol, and the like), alicyclic diols having a carbon number in the range of 6 to 36 (1,4-cyclohexanedimethanol, hydrogenated bisphenol A, and the like), adducts (number of added moles in the range of 1 to 30) of the above-described alicyclic diols with alkylene oxides having a carbon number in the range of 2 to 4 (ethylene oxide (hereinafter, abbreviated to EO), propylene oxide (hereinafter, abbreviated to PO), and butylene oxide (hereinafter, abbreviated to BO)), or adducts (number of moles in the range of 2 to 30) of bisphenols (bisphenol A, bisphenol F, bisphenol S, and the like) with alkylene oxides having a carbon number in the range of 2 to 4 (EO, PO, BO, and the like). These may be used singly, or two or more kinds thereof may be used in combination.

Examples of the polyvalent carboxylic acid component include divalent carboxylic acids (dicarboxylic acids), specifically alkanedicarboxylic acids having a carbon number in the range of 4 to 36 (succinic acid, apidic acid, sebacic acid, and the like), alkenylsuccinic acids (dodecenylsuccinic acid and the like), alicyclic dicarboxylic acids having a carbon number in the range of 4 to 36 (dimer acids (dimerized linolic acid) and the like), alkenedicarboxylic acids having a carbon number in the range of 4 to 36 (maleic acid, fumaric acid, citraconic acid, mesaconic acid, and the like), or aromatic dicarboxylic acids having a carbon number in the range of 8 to 36 (phthalic acid, isophthalic acid, terephthalic acid, or derivatives thereof, naphthalenedicarboxylic acid, and the like). These may be used singly, or two or more kinds thereof may be used in combination.

The number average molecular weight of the polyester resin is preferably in the range of 1000 to 50000, and more preferably in the range of 2000 to 20000.

A commercially available product may be used as the polyester resin. As the commercially available product, for example, a liquid dispersion in which the above-described polyester resin is dispersed in a water-based solvent as an aqueous dispersion, may be used. Examples of the commercially available product of the liquid dispersion include the following. In regard to the examples, the number within the parentheses represents the number average molecular weight of the polyester resin contained in the commercial product (liquid dispersion). These may be used singly, or two or more kinds thereof may be used in combination.

The examples include, all under trade names, ELITEL KA-5034 (manufactured by UNITIKA LTD., number average molecular weight: 8500), ELITEL KA-5071S (manufactured by UNITIKA LTD., number average molecular weight: 8500), ELITEL KA-1449 (manufactured by UNITIKA LTD., number average molecular weight: 7000), ELITEL KA-0134 (manufactured by UNITIKA LTD., number average molecular weight: 8500), ELITEL KA-3556 (manufactured by UNITIKA LTD., number average molecular weight: 8000), ELITEL KA-6137 (manufactured by UNITIKA LTD., number average molecular weight: 5000), ELITEL KZA-6034 (manufactured by UNITIKA LTD., number average molecular weight: 6500), ELITEL KT-8803 (manufactured by UNITIKA LTD., number average molecular weight: 15000), ELITEL KT-8701 (manufactured by UNITIKA LTD., number average molecular weight: 13000), ELITEL KT-9204 (manufactured by UNITIKA LTD., number average molecular weight: 17000), ELITEL KT-8904 (manufactured by UNITIKA LTD., number average molecular weight: 17000), ELITEL KT-0507 (manufactured by UNITIKA LTD., number average molecular weight: 17000), ELITEL KT-9511 (manufactured by UNITIKA LTD., number average molecular weight: 17000), and VYLONAL MD-2000 (manufactured by TOYOBO CO., LTD., number average molecular weight: 18000).

(Polyurethane resin)

Regarding the polyurethane resin that is used as the fixing resin, a polyurethane resin having a hydrophilic group can be used. Examples of the hydrophilic group include a carboxy group (-COOH) and a salt thereof, and a sulfonic acid group ($-SO_3H$) and a salt thereof. Examples of the salt include alkali metal salts such as sodium salt and potassium salt, and amine salts. Among the above-described hydrophilic groups, a carboxy group or a salt thereof is preferred.

The polyurethane resin is preferably an aqueous dispersion in which a self-emulsifying type polyurethane having a water-soluble functional group in the molecule is dispersed in a water-based solvent, or an aqueous dispersion in which a forcibly emulsified type polyurethane emulsified in a water-based solvent under strong mechanical shear force by using a surfactant in combination. The polyurethane resin in the aqueous dispersion can be obtained by a reaction between a polyol and an organic polyisocyanate as well as a hydrophilic group-containing compound.

Examples of the polyol that can be used for preparing the aqueous dispersion of the polyurethane resin include a polyester polyol, a polyether polyol, a polycarbonate polyol, and a polyolefin-based polyol.

EP 4 289 625 B1

Examples of the polyester polyol include condensation products of low-molecular weight polyols such as ethylene glycol, diethylene glycol, triethylene glycol, 1,2- and 1,3-propylene glycol, neopentyl glycol, 1,3- and 1,4-butanediol, 3-methylpentanediol, hexamethylene glycol, 1,8-octanediol, 2-methyl-1,3-propanediol, bisphenol A, hydrogenated bisphenol A, trimethylolpropane, and cyclohexanedimethanol; with polyvalent carboxylic acids such as succinic acid, glutaric acid, adipic acid, sebacic acid, phthalic acid, isophthalic acid, terephthalic acid, trimellitic acid, tetrahydrofuran acid, endomethine tetrahydrofuran acid, and hexahydrophthalic acid.

Examples of the polyether polyol include polyethylene glycol, polypropylene glycol, polyethylene polytetramethylene glycol, polypropylene polytetramethylene glycol, and polytetramethylene glycol.

Examples of the polycarbonate polyol can be obtained by reactions between a carbonic acid derivative such as diphenyl carbonate, dimethyl carbonate, or phosgene and a diol. Examples of the diol include ethylene glycol, diethylene glycol, triethylene glycol, 1,2- and 1,3-propylene glycol, neopentyl glycol, 1,3- and 1,4-butanediol, 3-methylpentanediol, hexamethylene glycol, 1,8-octanediol, 2-methyl-1,3-propanediol, bisphenol A, hydrogenated bisphenol A, trimethylolpropane, and cyclohexanedimethanol.

Examples of the organic polyisocyanate that can be used for preparing the aqueous dispersion of the polyurethane resin include aromatic isocyanates such as tolylene diisocyanate (TDI), diphenylmethane diisocyanate (MDI), polymeric MDI, xylylene diisocyanate (XDI), and tetramethylxylylene diisocyanate (TMXDI); aliphatic isocyanates such as hexamethylene diisocyanate (HMDI); and alicyclic isocyanates such as isophorone diisocyanate (IPDI) and 4,4'-dicyclohexylmethane diisocyanate (hydrogenated MDI, H12MDI). Regarding these, only one kind thereof may be used alone, or two or more kinds thereof may be used in combination.

Examples of the hydrophilic group-containing compound that can be used for preparing the aqueous dispersion of the polyurethane resin include carboxylic acid-containing compounds such as 2,2-dimethylolpropionic acid, 2,2-dimethylolbutanoic acid, 2,2-dimethylolbutyric acid, 2,2-dimethylolvaleric acid, and glycine, and derivatives such as sodium salts, potassium salts, and amine salts thereof; and sulfonic acid-containing compounds such as taurine (that is, aminoethylsulfonic acid) and ethoxypolyethylene glycol sulfonic acid, and derivatives such as sodium salts, potassium salts, and amine salts thereof.

The polyurethane resin can be obtained by a known method. For example, a polyurethane resin can be obtained by mixing the above-mentioned polyol, organic polyisocyanate, and hydrophilic group-containing compound and reacting the mixture at 30°C to 130°C for 30 minutes to 50 hours.

The polyurethane resin becomes a polyurethane resin having a hydrophilic group when extended by a chain extending agent to be polymerized. The chain extending agent is preferably water and/or an amine compound. By using water or an amine compound as the chain extending agent, an isocyanate-terminated prepolymer can be efficiently extended by reacting the polyurethane resin with a free isocyanate in a short time period.

Examples of the amine compound as the chain extending agent include aliphatic polyamines such as ethylenediamine and triethylenediamine; aromatic polyamines such as metaxylenediamine and toluylenediamine; and polyhydrazino compounds such as hydrazine and adipic acid dihydrazide. The amine compound may include a primary amine such as dibutylamine or a methyl ethyl keto-oxime as a reaction terminator to the extent that does not significantly hinder polymerization.

In the synthesis of the polyurethane resin, a solvent that is inert to isocyanate and is capable of dissolving a urethane prepolymer may be used. Examples of such a solvent include dioxane, methyl ethyl ketone, dimethylformamide, tetrahydrofuran, N-methyl-2-pyrrolidone, toluene, and propylene glycol monomethyl ether acetate. It is preferable that these hydrophilic organic solvents used in the reaction stage are eventually removed.

In the synthesis of the polyurethane resin, a catalyst such as an amine catalyst (for example, triethylamine, N-ethylmorpholine, or triethyldiamine), a tin-based catalyst (for example, dibutyltin dilaurate, dioctyltin dilaurate, or tin octoate), or a titanium-based catalyst (for example, tetrabutyl titanate) may be added in order to accelerate the reaction.

It is preferable that the number average molecular weight of the polyurethane resin is made as high as possible by introducing a branched structure or an internally crosslinked structure, and a polyurethane resin having a number average molecular weight of 50000 to 10000000 is preferred. It is because the polyurethane resin becomes less likely to be dissolved in the solvent by adjusting the molecular weight to be in the above-described range, and therefore, a coating film having excellent weather resistance and water resistance is obtained. According to the present specification, the number average molecular weight (Mn) is a value measured by gel permeation chromatography (GPC). The number average molecular weight (Mn) can be determined from, for example, a calibration curve produced with standard polystyrene samples by using "RID-6A" manufactured by SHIMADZU CORPORATION (column: "TSK-GEL" manufactured by Tosoh Corporation, solvent: tetrahydrofuran (THF), column temperature: 40°C).

A commercially available product may be used as the polyurethane resin. As the commercially available product, for example, a liquid dispersion in which the above-described polyurethane resin is dispersed in a water-based solvent as an aqueous dispersion, may be used.

Examples of the commercially available product of the liquid dispersion of the polyurethane resin include WBR-016U (manufactured by Taisei Fine Chemical Co., Ltd.), SUPERFLEX 620, SUPERFLEX 650, SUPERFLEX 500M, SUPERFLEX E-2000 (all manufactured by DKS Co., Ltd., "SUPERFLEX" is a registered trademark of the same company), PERMARIN UC-20 (manufactured by Sanyo Chemical Industries, Ltd., "PERMARIN" is a registered trademark of the same company), PARASURF UP-22 (manufactured by Ohara Paragium Chemical Co., Ltd.), and EVAFANOL HA-560 (manufactured by NICCA CHEMICAL CO., LTD.).

(Polyacrylic resin)

The polyacrylic resin that is used as the fixing resin may be a (co)polymer of a (meth)acrylic acid ester component or a copolymer of a (meth)acrylic acid ester component and a polymerizable component other than a (meth)acrylic acid ester component such as a styrene component. In the present specification, (meth)acrylic acid is a generic term for acrylic acid and methacrylic acid.

Examples of the (meth)acrylic acid ester component include methyl (meth)acrylate, ethyl (meth)acrylate, propyl (meth)acrylate, bul (meth)acrylate, 2-hydroxyethyl (meth)acrylate, 2-hydroxypropyl (meth)acrylate, 4-hydroxybutyl (meth)acrylate, cyclohexyl (meth)acrylate, tetrahydrofurfuryl (meth)acrylate, isobornyl (meth)acrylate, benzyl (meth) acrylate, 2-hydroxybutyl (meth)acrylate, benzyl (meth)acrylate, glycidyl (meth)acrylate, (meth)acrylic acid, (di)ethylene glycol di(meth)acrylate, 1,4-butanediol di(meth)acrylate, 1,6-hexanediol di(meth)acrylate, trimethylolpropane tri(meth)acrylate, glycerin di(meth)acrylate, 2-ethylhexyl (meth)acrylate, lauryl (meth)acrylate, stearyl (meth)acrylate, and acrylamide.

Examples of the styrene component include styrene, 4-methylstyrene, 4-hydroxystyrene, 4-acetoxystyrene, 4-acetylstyrene, and styrenesulfonic acid. Regarding these components, only one kind thereof may be used alone, or two or more kinds thereof may be used in combination.

The number average molecular weight (Mn) of the polyacrylic resin is preferably 1000 to 50000, and more preferably 2000 to 20000. It is because when the number average molecular weight (Mn) of the polyacrylic resin is 1000 or more, the cohesive force of the coating film becomes stronger, while adhesiveness is improved. Whereas when the number average molecular weight (Mn) is 50000 or less, satisfactory solubility in an organic solvent is obtained, and micronization of the particle size of the emulsified dispersion is promoted.

A commercially available product may be used as the polyacrylic resin. As the commercially available product, for example, a liquid dispersion in which the above-described polyacrylic resin is dispersed in a water-based solvent as an aqueous dispersion, may be used.

Examples of the commercially available product of the liquid dispersion of the polyacrylic resin include DELPET 60N, 80N (manufactured by Asahi Kasei Corp., "DELPET" is a registered trademark of the same company), DIANAL BR52, BR80, BR83, BR85, BR88 (manufactured by Mitsubishi Chemical Corporation, "DIANAL" is a registered trademark of the same company), KT75 (manufactured by Denka Company Limited), VINYBLAN 2680, 2682, 2684, 2685 (manufactured by Nissin Chemical Industry Co., Ltd., "VINYBLAN" is a registered trademark of the same company), and MOVINYL 6800D (manufactured by Japan Coating Resin Corporation).

Among these, it is preferable that the fixing resin contains an acid structure. When the fixing resin contains an acid structure, dispersion in a water-based solvent is enabled, that is, self-emulsification is enabled, even without the addition of a surfactant, and the water resistance of the coating film is improved. Such a self-emulsifying type resin can be dispersed and stabilized in a water-based solvent only by the ionicity of the molecule. Examples of the acid structure include acid groups such as a carboxy group (-COOH) and a sulfonic acid group (-SO$_3$H), The acid structure may be present in a side chain in the resin or may be present at the ends.

It is preferable that the acid structure is partially or entirely neutralized. By neutralizing the acid structure, the water-dispersibility of the resin can be improved. Regarding the examples of a neutralizing agent that neutralizes the acid structure, organic amines are preferred, and it is preferable to use an organic amine such as trimethylamine, triethylamine, tripropylamine, tributylamine, N-methyldiethanolamine, or triethanolamine.

(Surfactant)

The ink can optionally contain a surfactant. As a result, the ejection stability of the ink can be improved, and spreading (dot diameter) of the liquid droplets that have landed on a base material can be controlled.

Any surfactant can be used without particular limitation as long as it does not impair the effects of the present invention. However, when the ink contains an anionic compound in other constituent components, the ionicity of the surfactant is preferably of anionic, nonionic, or betaine type.

According to the present invention, preferably, a fluorine-based or silicone-based surfactant having a high ability of reducing static surface tension, an anionic surfactant such as dioctyl sulfosuccinate having a high ability of reducing dynamic surface tension, and a nonionic surfactant such as a polyoxyethylene alkyl ether having a relatively low molecular weight, a polyoxyethylene alkyl phenyl ether, an acetylene glycol, a PLURONIC (registered trademark) type surfactant, or a sorbitan derivative are preferably used. It is also preferable to use a fluorine-based or silicone-based surfactant and a surfactant having a high ability of reducing dynamic surface tension in combination.

By adding a silicone-based or fluorine-based surfactant as the surfactant, ink mixing into base materials formed from various hydrophobic resins, including a vinyl chloride sheet, and base materials with slow absorption, such as printing paper, can be further suppressed, and high-quality printed images are obtained.

The silicone-based surfactant is preferably a polyether-modified polysiloxane compound, and examples thereof include KF-351A and KF-642 manufactured by Shin-Etsu Chemical Co., Ltd.; and BYK345, BYK347, and BYK348 manufactured by BYK Chemie GmbH.

The fluorine-based surfactant means a product in which the hydrogen atoms bonded to carbon atoms of a hydrophobic group in an ordinary surfactant are partially or entirely substituted by fluorine. Above all, a surfactant having a perfluoroalkyl group in the molecule is preferred.

Among the above-described fluorine-based surfactants, some are commercially marketed under the trade name Megafac F from Dainippon Ink and Chemicals, Incorporated, some under the trade name Surflon from Asahi Glass Co., Ltd., some under the trade name Fluorad FC from Minnesota Mining and Manufacturing Company, some under the trade name Monflor from Imperial Chemical Industries Ltd, some under the trade name Zonyls from E. I. du Pont de Nemours and Company, and some under the trade name Licowet VPF from Farbwerke Hoechst AG.

The content of the surfactant in the ink is not particularly limited; however, the content is preferably in the range of 0.1% to 5.0% by mass.

(Other additives)

For the ink according to the present invention, in addition to those described above, various known additives, for example, a viscosity adjusting agent, a specific resistance adjusting agent, a film-forming agent, an ultraviolet absorber, an oxidation inhibitor, a discoloration inhibitor, a fungicide, and a rust preventive agent can be appropriately selected and used as necessary to the extent that does not impair the effects of the present invention, according to the purpose of improving ejection stability, compatibility with print heads and ink cartridges, storage stability, image storability, and other various performances.

Specifically, oil droplet fine particles of liquid paraffin, dioctyl phthalate, tricresyl phosphate, and silicone oil; the ultraviolet absorbers described in JP S57-74193A, JP S57-87988A, JP S62-261476A, and the like; the discoloration inhibitors described in JP S57-74192A, JP S57-87989A, JP S60-72785A, JP S61-146591A, JP H01-95091A, JP H03-13376A, and the like; and fluorescent brightening agents described in JP S59-42993A, JP S59-52689A, JP S62-280069A, JP S61-242871A, JP H04-219266A, and the like may be mentioned.

Preparation of the ink is carried out by mixing each of the above-described components so as to have the above-described contents. Preferably, it is preferable to mix the pigment with other components as a liquid dispersion in which the pigment is dispersed in a portion of a water-based solvent by a pigment dispersant. When the ink contains a fixing resin, it is preferable that the fixing resin is mixed with other components as a liquid dispersion in which the fixing resin is dispersed in a portion of a water-based solvent by using a surfactant that is added as necessary.

[Base material]

The base material that can be used for the image formation method of the present invention is not particularly limited; however, it is preferable that the base material is a non-absorbent base material. When a non-absorbent base material is used, the effects of the image formation method of the present invention are more prominent. In the present invention, the term "non-absorbent" indicates non-absorbent to water.

As an example of a non-water-absorbent base material, known plastic films can be used. Specific examples thereof include a polyester film of polyethylene terephthalate or the like, a polyethylene film, a polypropylene film, a polyamide-based film of nylon or the like, a polystyrene film, a polyvinyl chloride film, a polycarbonate film, a polyacrylonitrile film, and a biodegradable film such as a polylactic acid film. Furthermore, in order to impart gas barrier properties, moisture-proof properties, aroma retention properties, and the like, a film having one surface or both surfaces coated with polyvinylidene chloride, and a film on which a metal oxide is vapor-deposited can also be preferably used. Regarding the non-water-absorbent film, an unstretched film and a stretched film can all be preferably used.

In addition to these, a base material formed from a metal or an inorganic compound such as glass may be mentioned as the non-water-absorbent base material.

Furthermore, the non-water-absorbent base material can also be suitably used for a packaging material or the like for retort food, in which a thermosetting resin is provided as a coating layer on a metal base material. The packaging material for retort food is composed of, for example, a film obtained by lamination processing polypropylene on the food side and a polyester, a thermoplastic resin layer that blocks air, moisture, or light and hermetically sealing the food inside, or an aluminum foil layer on the outside, in order to block air, moisture, and light and hermetically seal the food inside.

According to the present invention, the thickness of the base material is preferably 10 to 120 $\mu$m, and more

preferably in the range of 12 to 60 μm.

EXAMPLES

Hereinafter, the present invention will be specifically described by way of Examples; however, the present invention is not intended to be limited to these. In the following Examples, unless particularly stated otherwise, the operations were carried out at room temperature (25°C). Furthermore, unless particularly stated otherwise, the units "%" and "parts" mean "% by mass" and "parts by mass", respectively.

Inkjet inks 1 to 7 having the compositions shown in the following Table I, which used the following materials, were prepared.

Magenta pigment: JM2120 (trade name, DIC Corporation, compound name: PR202/PV19)
Pigment dispersant: JONCRYL 819 (trade name; manufactured by BASF SE, an acrylic dispersant having a carboxy group neutralized by sodium hydroxide, acid value 75 mg KOH/g, solid content 20% by mass)

(Fixing resin)

· VYLONAL MD-2000 (trade name; manufactured by TOYOBO CO., LTD., aqueous dispersion of a polyester resin having a number average molecular weight of 18000; solid content 40% by mass)
· MOVINYL 6800D (trade name; manufactured by Japan Coating Resin Corporation, aqueous dispersion of a polyacrylic resin; solid content 45% by mass)

(Thixotropy-imparting agent)

· CELLENPIA TC-01A (trade name, manufactured by Nippon Paper Industries Co., Ltd., cellulose nanofibers, average width 3 to 4 nm, average length 0.8 μm, aspect ratio 200)
· LAPONITE RD (trade name, manufactured by BYK Chemie GmbH, smectite clay mineral, average thickness 0.92 nm, average major axis 25 nm, aspect ratio 27)

(Surfactant)

· KF-351A (trade name, manufactured by Shin-Etsu Chemical Co., Ltd., polyether-modified polysiloxane compound) · OLFINE E1010 (trade name, manufactured by Nissin Chemical Industry Co., Ltd., an acetylene glycol)

(Water-based solvent)

· Water: Ion-exchanged water
· Propylene glycol
· 1,2-Hexanediol

(Preparation of liquid pigment dispersion)

A mixed liquid obtained by adding 5.0 parts by mass of a magenta pigment (JM2120), 2.0 parts by mass in solid content of a pigment dispersant (JONCRYL 819), 30.0 parts by mass of propylene glycol, and 53.8 parts by mass of ion-exchanged water was premixed, subsequently the mixed liquid was dispersed by using a sand grinder filled with 0.5-mm zirconia beads at a volume ratio of 50%, and a liquid pigment dispersion was prepared. The average particle size of the pigment particles included in this liquid pigment dispersion was 110 nm. Measurement of the average particle size was conducted by using "ZETASIZER 1000HS" manufactured by Malvern Panalytical, Ltd.

(Preparation of inkjet inks 1 to 7)

A mixed liquid obtained by mixing the liquid pigment dispersion obtained as described above and each of the above-described components so as to obtain the composition indicated in the following Table was filtered by using a 1-μm filter to obtain inkjet inks 1 to 7. The content (% by mass) of each component in Table I is such that when the component is used as a liquid dispersion or a solution, the content represents the solid content contained in the component. For example, with regard to VYLONAL MD-2000 in the inkjet ink 2, the content of the polyester resin itself excluding the amount of water as a dispersing medium is 8.0% by mass.

(Preparation of primer inks Pr1 and Pr2)

In addition to the inkjet inks 1 to 7, primer inks Pr1 and Pr2 were obtained as primer inks by mixing so as to obtain the compositions shown in the following Table II and filtering the obtained mixed liquids by means of 1-μm filter.

(Evaluation of physical properties of ink)

The following physical properties of (a) to (k) were evaluated for the obtained inks. The results are shown in Table I and Table II.

(a) Viscosity at a shear rate of 1000 [1/s]
(b) Viscosity at a shear rate of 100 [1/s]
(c) Viscosity at a shear rate of 1 [1/s]
(d) |A1 - A100|
(e) |A100 - A1000|
(f) Whether Formula (I): A1000 < A100 < A1 applies
(g) Whether Formula (II): |A100 - A1000| < |A1 - A100| applies
(h)

$$\text{Formula (III): } 1 \text{ mPa·s} < |A1 - A1000|$$

(i)

$$\text{Formula (IV): } |A100 - A1000| < 10 \text{ mPa·s}$$

(j)

$$\text{Formula (V): } 2 \text{ mPa·s} < A1000 < 20 \text{ mPa·s}$$

(k) Surface tension: The surface tension was measured with a multifunctional automatic surface tensiometer K100 (manufactured by KRUSS GmbH).

Table 1

TABLE  I

|  |  |  | Ink 1 | Ink 2 | Ink 3 | Ink 4 |
|---|---|---|---|---|---|---|
| Composition (% by mass) | Pigment | Magenta pigment | 5.0 | 5.0 | 5.0 | 6.5 |
|  | Pigment dispersant | JONCRYL 819 | 2.0 | 2.0 | 2.0 | 2.5 |
|  | Fixing resin | Polyester resin; VYLONAL MD2000 | – | 8.0 | – | – |
|  |  | Polyacrylic resin; MOVINYL 6800D | 8.0 | – | 8.0 | 11.0 |
|  | Thixotropy-imparting agent | Cellulose nanofibers; CELLENPIA TC-01A | – | – | – | – |
|  |  | Smectite clay mineral; LAPONITE RD | – | – | – | – |
|  | Surfactant | KF-351A | 0.2 | 0.2 | 0.2 | 0.2 |
|  |  | OLFINE E1010 | 1.0 | 1.0 | 1.0 | 1.0 |
|  | Water-based solvent | Propylene glycol | 30.0 | 30.0 | 15.0 | – |
|  |  | 1,2-Hexanediol | – | – | 15.0 | 20.0 |
|  |  | Water | 53.8 | 53.8 | 53.8 | 58.8 |
|  |  | Sum of water-based solvents | 83.8 | 83.8 | 83.8 | 78.8 |
| Evaluation | Ink physical properties | Viscosity [mPa·s] shear rate 1000 [1/s] | 6.7 | 6.8 | 6.6 | 9.7 |
|  |  | Viscosity [mPa·s] shear rate 100 [1/s] | 7.0 | 7.0 | 6.9 | 10.3 |
|  |  | Viscosity [mPa·s] shear rate 1 [1/s] | 8.3 | 8.6 | 8.5 | 11.7 |
|  |  | A1–A100 | 1.3 | 1.6 | 1.6 | 1.4 |
|  |  | A100–A1000 | 0.3 | 0.2 | 0.3 | 0.6 |
|  |  | Formula(I): A1000<A100<A1 | Applicable | Applicable | Applicable | Applicable |
|  |  | Formula(II): \|A100–A1000\|<\|A1–A100\| | Applicable | Applicable | Applicable | Applicable |
|  |  | Formula(III): 1mPa·s<\|A1–A1000\| | Applicable | Applicable | Applicable | Applicable |
|  |  | Formula(IV): \|A100–A1000\|<10mPa·s | Applicable | Applicable | Applicable | Applicable |
|  |  | Formula(V): 2mPa·s<A1000<20mPa·s | Applicable | Applicable | Applicable | Applicable |
|  |  | Surface tension[mN/m] | 29.0 | 29.0 | 24.0 | 23.5 |

TABLE I Continued

| | | | Ink 5 | Ink 6 | Ink 7 |
|---|---|---|---|---|---|
| Composition (% by mass) | Pigment | Magenta pigment | 4.0 | 5.0 | 5.0 |
| | Pigment dispersant | JONCRYL 819 | 1.6 | 2.0 | 2.0 |
| | Fixing resin | Polyester resin; VYLONAL MD2000 | – | – | – |
| | | Polyacrylic resin; MOVINYL 6800D | 19.0 | 5.0 | – |
| | Thixotropy-imparting agent | Cellulose nanofibers; CELLENPIA TC-01A | – | 0.100 | – |
| | | Smectite clay mineral; LAPONITE RD | – | – | 0.500 |
| | Surfactant | KF-351A | 0.2 | 0.2 | 0.2 |
| | | OLFINE E1010 | 1.0 | 1.0 | 1.0 |
| | Water-based solvent | Propylene glycol | – | 30.0 | 30.0 |
| | | 1,2-Hexanediol | 10.0 | – | – |
| | | Water | 64.2 | 56.7 | 61.3 |
| | | Sum of water-based solvents | 74.2 | 86.7 | 91.3 |
| Evaluation | Ink physical properties | Viscosity [mPa·s] shear rate 1000 [1/s] | 9.0 | 11.0 | 10.1 |
| | | Viscosity [mPa·s] shear rate 100 [1/s] | 9.6 | 11.7 | 20.0 |
| | | Viscosity [mPa·s] shear rate 1 [1/s] | 14.0 | 54.0 | 136.0 |
| | | A1–A100 | 4.4 | 42.3 | 116 |
| | | A100–A1000 | 0.6 | 0.7 | 9.9 |
| | | Formula(I): A1000<A100<A1 | Applicable | Applicable | Applicable |
| | | Formula(II): \|A100-A1000\|<\|A1-A100\| | Applicable | Applicable | Applicable |
| | | Formula(III): 1mPa·s<\|A1-A1000\| | Applicable | Applicable | Applicable |
| | | Formula(IV): \|A100-A1000\|<10mPa·s | Applicable | Applicable | Applicable |
| | | Formula(V): 2mPa·s<A1000<20mPa·s | Applicable | Applicable | Applicable |
| | | Surface tension[mN/m] | 24.5 | 28.0 | 28.0 |

Table 2

TABLE II

| | | | Ink Pr1 | Ink Pr2 |
|---|---|---|---|---|
| Composition (% by mass) | Aggregating agent | Calcium acetate | 3.0 | 3.0 |
| | Fixing resin | Polyacrylic resin; MOVINYL 6800D | 10.0 | 5.0 |
| | Thixotropy-imparting agent | Cellulose nanofibers; CELLENPIA TC-01A | 0.1 | 0.1 |
| | Surfactant | KF-351A | 0.5 | 0.5 |
| | Water-based solvent | Propylene glycol | 30.0 | 30.0 |
| | | Water | 56.4 | 61.4 |
| | | Sum of water-based solvents | 86.4 | 91.4 |
| Evaluation | Ink physical properties | Viscosity [mPa·s] shear rate 1000 [1/s] | 7.0 | 10.0 |
| | | Viscosity [mPa·s] shear rate 100 [1/s] | 7.2 | 12.0 |
| | | Viscosity [mPa·s] shear rate 1 [1/s] | 8.2 | 60.0 |
| | | A1-A100 | 1.0 | 48.0 |
| | | A100-A1000 | 0.2 | 2.0 |
| | | A1000<A100<A1 | Applicable | Applicable |
| | | \|A100-A1000\|<\|A1-A100\| | Applicable | Applicable |
| | | Formula(III): 1mPa·s<\|A1-A1000\| | Applicable | Applicable |
| | | Formula(IV): \|A100-A1000\|<10mPa·s | Applicable | Applicable |
| | | Formula(V): 2mPa·s<A1000<20mPa·s | Applicable | Applicable |
| | | Surface tension [mN/m] | 29.0 | 29.0 |

(Image formation)

For each of the inks obtained as described above, the following ejection speed stability was evaluated by using an inkjet image forming apparatus (inkjet printer (manufactured by Tritek Co., Ltd.) and using a head having a mechanism that circulates ink within the head by means of two circulation paths (discharging flow paths for ink), under the conditions shown in the following Table III with the resolution set at 720 × 720 dpi. The results are shown in the following Table III.

Each condition in Table III is as follows.

· Circulation differential pressure ΔP: Differential pressure of the INLET and OUTLET of the inkjet head (specifically, circulation differential pressure at first and fourth ink ports 53 and 56)
· Nozzle circulation flow rate Q: Calculated by the following formula

$$\text{Circulation flow rate } Q = \text{Circulation differential pressure } \Delta P / \text{head flow path resistance } R$$

· Average flow velocity and average shear rate were calculated by the following formulas

$$\text{Average shear rate} = \text{Average flow velocity} \div \text{radius of representative circular pipe}$$

Radius of representative circular pipe = In case of a non-circular flow path, positive square root of (cross-sectional area ÷ π) Circulation flow rate of a single nozzle = Circulation flow rate of all nozzles ("circulation flow rate Q") ÷ number of nozzles

26

Average flow velocity = Circulation flow rate of a single nozzle ÷ cross-sectional area of a flow path communicating with nozzles

Meanwhile, the following conditions were set:

· Number of nozzles: 1024 [pieces]
· Cross-sectional area of flow path communicating with nozzles: $2.5 \times 10^{-8}$ [m$^2$]
· Radius of representative circular pipe of flow path communicating with nozzles: $8.9 \times 10^{-5}$ [m].

(Ejection speed stability)

The ejection speed at a single nozzle was set to 6 m/s, and subsequently, the ejection speed was measured ten times at an interval of 1 minute by the following method. Then, the speed fluctuation of the ejection speed was calculated by the following formula from the maximum speed and the minimum speed of the ten ejection speeds, and the speed fluctuation was evaluated by the following criteria.

$$\text{Average speed} = (\text{Maximum speed} + \text{minimum speed}) \div 2$$

$$\text{Speed fluctuation} = (\text{Maximum speed} - \text{minimum speed})/\text{average speed} \times 100$$

(Criteria)

AA: Speed fluctuation is 5% or less.
A: Speed fluctuation is greater than 5% and 10% or less.
B: Speed fluctuation is greater than 10%.

The ejection speed was measured as follows with reference to paragraphs [0049] to [0056] of JP 2007-15192A.
Images of single liquid droplets ejected from all nozzles at the same timing were captured by a stroboscope and a CCD camera at each of strobe delay time (1) and strobe delay time (2), and each of the following treatments was carried out.
Here, for the same liquid droplet ejected through the nozzles, the liquid droplet imaged at the first strobe delay time (1) is designated as "liquid droplet 1", and the liquid droplet imaged at the second strobe delay time (2) is designated as "liquid droplet 2".
The upper limit value of the strobe delay time (1) and the delay time from the strobe delay time (1) to the strobe delay time (2) for the second imaging were set in advance at the input setter of the computer.
The "strobe delay time" is the timing for ejecting liquid droplets into the inkjet head, for example, the delay time from the time point of triggering liquid droplet ejection to the time point of emitting stroboscopic light and then capturing an image by a CCD camera. Furthermore, the strobe delay time (1) is the time of capturing an image for the first time, and the strobe delay time (2) is the time of capturing an image after the passage of a delay time set from the strobe delay time (1).
First, the strobe delay time (1) for capturing an image of the liquid droplet 1 ejected from the inkjet head by means of the CCD camera and the stroboscope was set to 100 μsec. Then, liquid droplets were ejected from the nozzle, and then an image of the liquid droplet 1 was captured at the set timing of the strobe delay time (1). From the captured image of the liquid droplet 1, barycenters X1 and Y1 of the liquid droplet 1 were calculated.
Next, a preset delay time was added to the strobe delay time (1), and the strobe delay time (2) was set to 100 μsec. Then, images of the same liquid droplets were captured at the timing for the set strobe delay time (2), and images of the liquid droplet 2 were captured. From the captured images of the liquid droplet 2, barycenters X2 and Y2 of the liquid droplet 2 were calculated.
Next, the apparent ejection speed was calculated by using each barycenter of these liquid droplet 1 and the liquid droplet 2, the strobe delay time (1), and the strobe delay time (2). The apparent ejection speed is the speed that can be determined from the position of an imaged liquid droplet. Calculation of the apparent ejection speed was determined by the following formula.

Mathematical Formula 1

$$\text{Ejection speed} = \frac{\sqrt{(X2 - X1)^2 + (Y2 - Y1)^2}}{\text{Strobe delay time (2)}}$$

Table 3

TABLE III

| Ink No. | Circulation differential pressure ΔP [Pa] | Nozzle circulation flow rate Q [ml/sec] | Average flow velocity [m/sec] | Average shear rate [1/s] | Ejection speed stability | Remarks |
|---|---|---|---|---|---|---|
| 1 | $0.0 \times 10^0$ | $0.0 \times 10^0$ | $0.0 \times 10^0$ | 0 | B | Comparative Example |
| | $5.0 \times 10^3$ | $1.1 \times 10^{-1}$ | $4.3 \times 10^{-3}$ | 48 | B | Comparative Example |
| | $1.0 \times 10^4$ | $2.4 \times 10^{-1}$ | $9.3 \times 10^{-3}$ | 104 | A | Present invention |
| | $1.5 \times 10^4$ | $3.6 \times 10^{-1}$ | $1.4 \times 10^{-2}$ | 158 | AA | Present invention |
| 2 | $0.0 \times 10^0$ | $0.0 \times 10^0$ | $0.0 \times 10^0$ | 0 | B | Comparative Example |
| | $5.0 \times 10^3$ | $1.1 \times 10^{-1}$ | $4.2 \times 10^{-3}$ | 47 | B | Comparative Example |
| | $1.0 \times 10^4$ | $2.4 \times 10^{-1}$ | $9.3 \times 10^{-3}$ | 104 | A | Present invention |
| | $1.5 \times 10^4$ | $3.6 \times 10^{-1}$ | $1.4 \times 10^{-2}$ | 158 | AA | Present invention |
| 3 | $0.0 \times 10^0$ | $0.0 \times 10^0$ | $0.0 \times 10^0$ | 0 | B | Comparative Example |
| | $5.0 \times 10^3$ | $1.1 \times 10^{-1}$ | $4.2 \times 10^{-3}$ | 47 | B | Comparative Example |
| | $1.0 \times 10^4$ | $2.4 \times 10^{-1}$ | $9.4 \times 10^{-3}$ | 105 | A | Present invention |
| | $1.5 \times 10^4$ | $3.7 \times 10^{-1}$ | $1.5 \times 10^{-2}$ | 163 | AA | Present invention |
| 4 | $0.0 \times 10^0$ | $0.0 \times 10^0$ | $0.0 \times 10^0$ | 0 | B | Comparative Example |
| | $5.0 \times 10^3$ | $7.6 \times 10^{-2}$ | $2.9 \times 10^{-3}$ | 33 | B | Comparative Example |
| | $1.0 \times 10^4$ | $1.5 \times 10^{-1}$ | $6.0 \times 10^{-3}$ | 67 | B | Comparative Example |
| | $1.5 \times 10^4$ | $2.5 \times 10^{-1}$ | $9.6 \times 10^{-3}$ | 108 | A | Present invention |
| 5 | $0.0 \times 10^0$ | $0.0 \times 10^0$ | $0.0 \times 10^0$ | 0 | B | Comparative Example |
| | $7.5 \times 10^3$ | $1.1 \times 10^{-1}$ | $4.4 \times 10^{-3}$ | 49 | B | Comparative Example |
| | $1.5 \times 10^4$ | $2.6 \times 10^{-1}$ | $1.0 \times 10^{-2}$ | 113 | A | Present invention |
| | $2.0 \times 10^4$ | $3.5 \times 10^{-1}$ | $1.4 \times 10^{-2}$ | 154 | AA | Present invention |
| 6 | $0.0 \times 10^0$ | $0.0 \times 10^0$ | $0.0 \times 10^0$ | 0 | B | Comparative Example |
| | $7.5 \times 10^3$ | $6.3 \times 10^{-2}$ | $2.4 \times 10^{-3}$ | 27 | B | Comparative Example |
| | $1.5 \times 10^4$ | $1.9 \times 10^{-1}$ | $7.2 \times 10^{-3}$ | 81 | B | Comparative Example |
| | $2.0 \times 10^4$ | $2.9 \times 10^{-1}$ | $1.1 \times 10^{-2}$ | 128 | A | Present invention |
| 7 | $0.0 \times 10^0$ | $0.0 \times 10^0$ | $0.0 \times 10^0$ | 0 | B | Comparative Example |
| | $1.0 \times 10^4$ | $2.4 \times 10^{-2}$ | $9.3 \times 10^{-4}$ | 10 | B | Comparative Example |
| | $2.0 \times 10^4$ | $1.1 \times 10^{-1}$ | $4.3 \times 10^{-3}$ | 48 | B | Comparative Example |
| | $3.0 \times 10^4$ | $2.8 \times 10^{-1}$ | $1.1 \times 10^{-2}$ | 121 | A | Present invention |
| Pr1 | $0.0 \times 10^0$ | $0.0 \times 10^0$ | $0.0 \times 10^0$ | 0 | B | Comparative Example |
| | $5.0 \times 10^3$ | $1.1 \times 10^{-1}$ | $4.4 \times 10^{-3}$ | 49 | B | Comparative Example |
| | $1.0 \times 10^4$ | $2.3 \times 10^{-1}$ | $9.0 \times 10^{-3}$ | 101 | A | Present invention |
| | $1.5 \times 10^4$ | $3.5 \times 10^{-1}$ | $1.4 \times 10^{-2}$ | 151 | AA | Present invention |
| Pr2 | $0.0 \times 10^0$ | $0.0 \times 10^0$ | $0.0 \times 10^0$ | 0 | B | Comparative Example |
| | $5.0 \times 10^3$ | $4.2 \times 10^{-2}$ | $1.6 \times 10^{-3}$ | 18 | B | Comparative Example |
| | $1.0 \times 10^4$ | $1.0 \times 10^{-1}$ | $4.1 \times 10^{-3}$ | 45 | B | Comparative Example |
| | $2.0 \times 10^4$ | $2.9 \times 10^{-1}$ | $1.1 \times 10^{-2}$ | 126 | A | Present invention |

As shown in the above-described results, it is understood that stability of the ejection speed can be improved by using the highly thixotropic ink according to the present invention and controlling the average shear rate in flow paths communicating with nozzles to be 100 [1/s] or more.

INDUSTRIAL APPLICABILITY

The present invention can be utilized for an image formation method which uses a highly thixotropic ink, suppresses changes in the ink viscosity during ejection when an ink is ejected by circulating the ink in the vicinity of nozzles, and can promote improvement in the image quality by making the ejection speeds among nozzles uniform.

REFERENCE SIGNS LIST

1 head chip
8 ink circulation device
11 nozzle substrate
111 nozzle
12 flow path spacer substrate
121 individual ink discharging path
122 first individual ink discharging path
123 second individual ink discharging path
13 pressure chamber substrate
131 pressure chamber
132 air chamber
133 common ink discharging path
134 first common ink discharging path
135 second common ink discharging path
136 partition wall (pressure generating means)
100 inkjet head
200 inkjet recording apparatus
240 controller
R flow path communicating with nozzle

**Claims**

1.  An image formation method that uses an inkjet recording apparatus (200) having an inkjet head (100) including:

    a pressure chamber (131) into which an ink is supplied through an ink supply path to freely apply pressure to the ink stored therein;
    nozzles (111) provided to communicate with the pressure chamber (131), each nozzle (111) having an ejection opening for ejecting the ink; and
    a plurality of ink discharging flow paths connected in proximity to communication sites of the nozzles (111) with the pressure chamber (131),
    wherein the plurality of ink discharging flow paths are arranged such that two or more of the ink discharging flow paths are provided to the ejection opening of each nozzle (111),
    the inkjet recording apparatus (200) includes an ink circulation device (8) that circulates the ink to the ink discharging flow paths through the ink supply path,
    **characterized in that**,
    when a viscosity at 25°C of the ink at a shear rate of 1 [1/s] is designated as A1, and the viscosity at a shear rate of 100 [1/s] is designated as A100, and the viscosity at a shear rate of 1000 [1/s] is designated as A1000, the relationships of the following Formula (I) and Formula (II) are satisfied, and
    the ink circulation device (8) controls an average shear rate in the flow paths communicating with the nozzles (111) in the pressure chamber (131) to be 100 [1/s] or more:

    $$\text{Formula (I): } A1000 < A100 < A1$$

    $$\text{Formula (II): } |A100 - A1000| < |A1 - A100|.$$

2.  The image formation method according to claim 1 , wherein the ink satisfies the relationships of the following Formulas (III) to (V):

$$\text{Formula (III): } 1\text{ mPa·s} < |A1 - A1000|$$

$$\text{Formula (IV): } |A100 - A1000| < 10\text{ mPa·s}$$

$$\text{Formula (V): } 2\text{ mPa·s} < A1000 < 20\text{ mPa·s}.$$

3. The image formation method according to claim 1 or 2, wherein a speed fluctuation in the ejection speed of the ink that is ejected through the nozzles (111) is 5% or less.

4. The image formation method according to any one of claims 1 to 3, wherein an actuator that imparts pressure to the ink in the pressure chamber (131) is provided, and
the actuator applies an oscillating waveform that has a smaller voltage than a drive waveform, which ejects the ink through the nozzles (111), and vibrates an interface of the ink in the pressure chamber (131).

5. The image formation method according to any one of claims 1 to 4, wherein the ink contains a pigment, a fixing resin, a water-soluble solvent, and water, and the ink contains

the pigment in an amount in the range of 3% to 10% by mass,
the fixing resin in an amount in the range of 8% to 20% by mass,
the water-soluble solvent in an amount in the range of 10% to 30% by mass, and
the water in an amount in the range of 40% to 79% by mass.

6. The image formation method according to any one of claims 1 to 5, wherein the ink has a surface tension in the range of 22 to 25 mN/m.

**Patentansprüche**

1. Bildgebungsverfahren, das ein Tintenstrahlaufzeichnungsgerät (200) mit einem Tintenstrahlkopf (100) verwendet, umfassend:

eine Druckkammer (131), in die über einen Tintenzufuhrweg Tinte zugeführt wird, um freien Druck auf die darin gespeicherte Tinte auszuüben;
Düsen (111), die so angeordnet sind, dass sie mit der Druckkammer (131) in Verbindung stehen, wobei jede Düse (111) eine Ausstoßöffnung zum Ausstoßen der Tinte aufweist; und
eine Vielzahl von Tintenausstoßströmungswegen, die in der Nähe der Verbindungsstellen der Düsen (111) mit der Druckkammer (131) verbunden sind,
wobei die mehreren Tintenausstoßströmungswege so angeordnet sind, dass zwei oder mehr der Tintenausstoßströmungswege zur Ausstoßöffnung jeder Düse (111) vorgesehen sind,
wobei die Tintenstrahlaufzeichnungsvorrichtung (200) eine Tintenumwälzvorrichtung (8) umfasst, die die Tinte durch den Tintenzufuhrweg zu den Tintenausstoßströmungswegen umwälzt,
**dadurch gekennzeichnet, dass**
wenn eine Viskosität bei 25 °C (° C) der Tinte bei einer Schergeschwindigkeit von 1 [1/s] als A1 bezeichnet wird, und die Viskosität bei einer Schergeschwindigkeit von 100 [1/s] als A100 und die Viskosität bei einer Schergeschwindigkeit von 1000 [1/s] als A1000 bezeichnet wird, die Beziehungen der folgenden Formel (I) und Formel (II) erfüllt sind, und
die Tintenzirkulationsvorrichtung (8) eine durchschnittliche Schergeschwindigkeit in den mit den Düsen (111) in der Druckkammer (131) verbundenen Strömungswegen auf 100 [1/s] oder mehr regelt:

$$\text{Formel (I): } A1000 < A100 < A1$$

$$\text{Formel (II): } |A100 - A1000| < |A1 - A100|.$$

2. Bildgebungsverfahren nach Anspruch 1, wobei die Tinte die Beziehungen der folgenden Formeln (III) bis (V) erfüllt:

Formel (III): 1 mPa· s < |A1 - A1000|

Formel (IV): |A100 - A1000| < 10 mPa· s

Formel (V): 2 mPa· s < A1000 < 20 mPa· s.

**3.** Bildgebungsverfahren nach Anspruch 1 oder 2, wobei eine Geschwindigkeitsschwankung der Ausstoßgeschwindigkeit der durch die Düsen (111) ausgestoßenen Tinte 5 % oder weniger beträgt.

**4.** Bildgebungsverfahren nach einem der Ansprüche 1 bis 3, wobei ein Aktuator vorgesehen ist, der Druck auf die Tinte in der Druckkammer (131) ausübt, und
der Aktuator eine oszillierende Wellenform mit einer geringeren Spannung als eine Antriebswellenform anlegt, die die Tinte durch die Düsen (111) ausstößt, und eine Grenzfläche der Tinte in der Druckkammer (131) in Schwingung versetzt.

**5.** Bildgebungsverfahren nach einem der Ansprüche 1 bis 4, wobei die Tinte ein Pigment, ein Fixierharz, ein wasserlösliches Lösungsmittel und Wasser enthält und die Tinte

das Pigment in einer Menge im Bereich von 3 bis 10 Massenprozent,
das Fixierharz in einer Menge im Bereich von 8 bis 20 Massenprozent,
das wasserlösliche Lösungsmittel in einer Menge im Bereich von 10 bis 30 Massenprozent und
das Wasser in einer Menge im Bereich von 40 bis 79 Massenprozent enthält.

**6.** Bildgebungsverfahren nach einem der Ansprüche 1 bis 5, wobei die Tinte eine Oberflächenspannung im Bereich von 22 bis 25 mN/m aufweist.


**Revendications**

**1.** Procédé de formation d'images qui utilise un appareil d'enregistrement à jet d'encre (200) ayant une tête à jet d'encre (100) comprenant :

une chambre de pression (131) dans laquelle une encre est fournie par l'intermédiaire d'un chemin d'alimentation en encre pour appliquer librement une pression à l'encre stockée dans celle-ci ;
des buses (111) prévues pour communiquer avec la chambre de pression (131), chaque buse (111) comportant une ouverture d'éjection pour éjecter l'encre ; et
une pluralité de chemins d'écoulement de décharge d'encre connectés à proximité des sites de communication des buses (111) avec la chambre de pression (131),
dans lequel la pluralité de chemins d'écoulement de décharge d'encre sont agencés de telle sorte que deux ou plusieurs des chemins d'écoulement de décharge d'encre sont fournis à l'ouverture d'éjection de chaque buse (111),
l'appareil d'enregistrement à jet d'encre (200) comprend un dispositif de circulation d'encre (8) qui fait circuler l'encre vers les chemins d'écoulement de décharge d'encre à travers le chemin d'alimentation en encre,
**caractérisé en ce que**,
lorsque la viscosité à 25 °C de l'encre à un taux de cisaillement de 1 [1/s] est désignée par A1, et que la viscosité à un taux de cisaillement de 100 [1/s] est désignée par A100, et que la viscosité à un taux de cisaillement de 1000 [1/s] est désignée par A1000, les relations de la Formule (I) et de la Formule (II) suivantes sont satisfaites, et le dispositif de circulation d'encre (8) contrôle un taux de cisaillement moyen dans les chemins d'écoulement communiquant avec les buses (111) dans la chambre de pression (131) pour qu'il est de 100 [1/s] ou plus :

Formule (I) : A1000 < A100 < A1

Formule (II): | A100 - A1000 | < | A1 - A100 |.

**2.** Le procédé de formation d'images selon la revendication 1, dans lequel l'encre satisfait aux relations des Formules (III) à (V) suivantes :

$$\text{Formule (III): } 1 \text{ mPa} \cdot \text{s} < |\text{A1 - A1000}|$$

$$\text{Formule (IV): } |\text{A100 - A1000}| < 10 \text{ mPa} \cdot \text{s}$$

$$\text{Formule (V): } 2 \text{ mPa} \cdot \text{s} < \text{A1000} < 20 \text{ mPa} \cdot \text{s.}$$

3. Le procédé de formation d'images selon la revendication 1 ou 2, dans lequel une fluctuation de vitesse dans la vitesse d'éjection de l'encre, qui est éjectée par les buses (111), est de 5 % ou moins.

4. Le procédé de formation d'images selon l'une quelconque des revendications 1 à 3, dans lequel un actionneur qui applique de la pression à l'encre dans la chambre de pression (131) est prévu, et
l'actionneur applique une forme d'onde oscillante qui a une tension inférieure qu'une forme d'onde d'entraînement, qui éjecte l'encre à travers les buses (111), et fait vibrer une interface de l'encre dans la chambre de pression (131).

5. Le procédé de formation d'images selon l'une quelconque des revendications 1 à 4, dans lequel l'encre contient un pigment, une résine de fixation, un solvant hydrosoluble et de l'eau, et l'encre contient

le pigment en une quantité dans la plage de 3 % à 10 % en masse,
la résine de fixation en une quantité dans la plage de 8 % à 20 % en masse,
le solvant hydrosoluble en une quantité dans la plage de 10 % à 30 % en masse, et
l'eau en une quantité dans la plage de 40 % à 79 % en masse.

6. Le procédé de formation d'images selon l'une quelconque des revendications 1 à 5, dans lequel l'encre a une tension superficielle dans la plage de 22 à 25 mN/m.

# FIG.1

# FIG.2

REAR

LEFT ← → RIGHT

FRONT

# FIG.3A

# FIG.3B

# FIG.4

UP

LEFT     REAR

FRONT     RIGHT

DOWN

# FIG.5

## FIG.6A

## FIG.6B

## FIG.7A

## FIG.7B

# *FIG.8*

# FIG.9A

UP

REAR ←→ FRONT

DOWN

# FIG.9B

UP

REAR ←→ FRONT

DOWN

## FIG.10A

136 136 136 136 136

13
12
11

131 111 132 111 111 111 111 135

UP

LEFT ←→ RIGHT

DOWN

## FIG.10B

13
12
11

123 123 123 123 123 134 135

133

UP

LEFT ←→ RIGHT

DOWN

# FIG.11

# FIG.12

# FIG.13

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011225859 A
- JP 5514579 B
- US 2010165020 A1
- JP S5774193 A
- JP S5787988 A
- JP S62261476 A
- JP S5774192 A
- JP S5787989 A
- JP S6072785 A
- JP S61146591 A
- JP H0195091 A
- JP H0313376 A
- JP S5942993 A
- JP S5952689 A
- JP S62280069 A
- JP S61242871 A
- JP H04219266 A
- JP 2007015192 A

**Non-patent literature cited in the description**

- Interface and Colloids. Shin Jikken Kagaku Koza (Lectures on New Experimental Chemistry). Maruzen Publishing Co., Ltd., vol. 18, 68-117